# EUROPÄISCHE PATENTANMELDUNG

(11) **EP 2 581 137 A1**
(43) Veröffentlichungstag der Anmeldung: **17.04.2013**
(21) Anmeldenummer: 12156519.6
(22) Anmeldetag: 22.02.2012
(51) Int. Cl.: B05B 7/00, B05B 13/00

(54) **Verfahren zur Flüssigkeitsdispergierung mit einer Aerosolbildung in einem dispersen Luftstrahl und ein mobiler Aerosolgenerator zur Generierung von Aerosolen mit einer regelbaren Dispersität**

(30) Priorität: 11.10.2011 RU 2011141235
(71) Anmelder: Abdrazyakov, Oleg, Ufa 450105 (RU)
(72) Erfinder: Abdrazyakov, Oleg, Ufa 450105 (RU)
(74) Vertreter: Jeck, Anton

(57) **Zusammenfassung**

Die Erfindung betrifft ein Verfahren zur Flüssigkeitsdispergierung mit einer Aerosolbildung in einem dispersen Luftstrahl einschließlich
- der Zuführung einer durchflussgeregelten Flüssigkeit unter einem konstanten Vorgabedruck,
- ihrer Voratomisierung in einem hydraulischen Strahlzerstäuber (11) eines Dispergators (10) über eine spezielle Ringdüse (12) mit einer veränderbaren Querschnittsfläche,
- der Zuführung der voratomisierten Flüssigkeit in einen Dispergensstrahl, wobei das Dispergens mit einem Druck in ein Gebläse gepresst wird, der durch die Veränderung der Drehzahl des Gebläses geregelt wird,
- der Zuführung des Dispergens in den Dispergator (10), in dem das Dispergens über eine Überschalldüse (9) mit regelbarer Querschnittsfläche im Bereich zwischen einer Unter- und Überschallgeschwindigkeit beschleunigt wird, um die voratomisierte Flüssigkeit endgültig aerodynamisch zu einem Aerosol zu dispergieren, wobei die Dispersität des Aerosols mittels einer Veränderung des Flüssigkeitsdurchflusses, der Dispergensdurchflussmenge, des Dispergensdrucks und damit der Strahlgeschwindigkeit des Dispergens aus der Überschalldüse (9), welche das Aerosol zur Anwendungsstelle fördert, geregelt wird.

Damit die vielen Nachteile der bekannten Verfahren vermieden werden, sieht die Erfindung vor, dass das Dispergensmedium in einem polytropen Prozess gepresst wird, wobei der Verdichtungswirkungsgrad im Bereich bis 2,2 liegt, dass die Tropfen der in einem als Fliehkraftzerstäuber (11) ausgebildeten Strahlzerstäuber voratomisierten Flüssigkeit durch die Dispergenswärme im Strahl erwärmt werden, wobei die Tropfen des Dispergensstrahls über ein Feld von Dispergens-Ultraschallschwingungen (US-Schwingungen) geleitet werden, die von einem Hartmannschen Resonator (13) erzeugt werden, der von dem Dispergensstrahl erregt wird und dass die Flüssigkeitsdurchflussmenge nicht nur durch Veränderung der Durchflussquerschnittsfläche der speziell geformten Ringdüse (12) des Fliehkraftzerstäubers (11) sondern auch durch Korrektur eines vorgegebenen und danach konstant aufrechter haltenen Niveaus des aktuellen Flüssigkeitsdrucks beeinflusst wird. Zudem betrifft die Erfindung die Ausbildung eines mobilen Aerosolgenerators zur Anwendung des Verfahrens.

## Beschreibung

Die Erfindung betrifft ein Verfahren zur Flüssigkeitsdispergierung mit einer Aerosolbildung in einem dispersen Luftstrahl nach dem Oberbegriff des Anspruchs 1 und einen Aerosolgenerator zur Generierung von Aerosolen mit einer regelbaren Dispersität.

Das mit Hilfe dieses Aerosolgenerators ausgeführte Verfahren umfasst einen Dispergensanlauf bis zu einer Überschallgeschwindigkeit, eine Flüssigkeitsatomisierung in dem durch Druckluft von einem Luftverdichter erregten akustischen Atomisator, die Zuführung der vernebelten Flüssigkeit aus einer Düse zu dem Luftmediumstrahl, eine endgültige aerodynamische Atomisierung der Flüssigkeit zum Aerosol mittels eines Mediumstrahls und eine Dispersitätsregelung mittels einer Veränderung des Flüssigkeitsdurchflusses.

Das Verfahren und der Aerosolgenerator haben einen Mangel, der ihre Funktionsmöglichkeiten einschränkt und zwar: Die Veränderung der Flüssigkeitsdurchflussmenge ist die einzige Einflussmaßnahme hinsichtlich der Aerosol-Dispersitätsregelung. Der akustische Atomisator ist nur für den Betrieb bis zu einem bestimmten Durchflussmengenverhältnis zwischen der Druckluft von dem Verdichter und der Flüssigkeit ausgelegt. Wird die relative Flüssigkeitsdurchflussmengengrenze überschritten, so wird die akustische Einwirkung durch die Einwirkung des Flüssigkeitsstroms unterdrückt, und der Atomisator arbeitet weiter wie ein üblicher hydraulischer Zerstäuber. Dies führt zu einer sprunghaften Dispersitätsverringerung.

Das Patent RU 37300, U1 vom 20.04.2004 (IPC: A01M7/00) offenbart einen Aerosolgenerator (Flüssigkeitsvernebler) AGRD mit einer regelbaren Dispersität. Es geht um eine Mobilanlage, die auf einem Fahrzeug angeordnet ist. Der Aerosolgenerator enthält:
- einen pneumatischen Dispergator mit einer regelbaren Dispersität und einer veränderbaren Druckluftdurchflussmenge über eine Überschalldüse und eine Veränderung der Flüssigkeitsdurchflussmenge über eine speziell geformte Ringdüse seiner hydraulischen Strahldüse;
- einen ferngesteuerten Motor mit einer Drehzahlsteuerung. Der Motor treibt über eine ferngesteuerte Kupplung ein Schaltgetriebe an und dreht ein Druckluftgebläse für die Überschalldüse des Dispergators. Dabei ist die kleinste Querschnittsfläche der Düse einstellbar. Der Dispergator ist mit dem Gebläse über eine Hauptluftleitung aus zwei zueinander drehbaren Bögen und einem Gebläse verbunden. Das ermöglicht, die Düsenausrichtung innerhalb der oberen Halbkugel im Raum zu verändern;
- ein hydraulisches System mit einer Pumpe mit einem Motorantrieb. Dabei ist es möglich, einen konstanten Flüssigkeitsdruck vor der speziell geformten Ringdüse der Strahldüse aufrechtzuerhalten und die Durchflussquerschnittsfläche einzustellen. Das hydraulische System umfasst Gefäße mit einer Arbeitsflüssigkeit, Hauptleitungen, eine Absperrarmatur, Filter, regelbare Abfluss-Federventile und eine Kontrollgerätetechnik;
- ein pneumatisches System mit elektrischen Luftdruckventilen, einen Druckluftzylinder mit einem Absperrhahn und
- ein Fernüberwachungs- und Fernbedienungspult, um den Betrieb des Generators zu steuern.

Das mit Hilfe des Generators ausgeführte Verfahren umfasst einen Anlauf im Bereich von einer Unterschallgeschwindigkeit bis einer Überschallgeschwindigkeit von Dispergens - Druckluft - in der Überschalldüse des Dispergators, eine hydraulische Flüssigkeitsvernebelung über die speziell geformte Ringdüse der hydraulischen Strahldüse des Dispergators mit einem konstanten Druck der Zuführung der vernebelten Substanz aus der Überschalldüse zum Mediumstrahl, eine endgültige aerodynamische Atomisierung der Flüssigkeit zum Aerosol mittels des Strahls, eine Aerosol-Dispersitätsregelung mittels einer Veränderung des Flüssigkeitsdurchflusses über die speziell geformte Ringdüse mittels Einstellung der Größe der Düsendurchflussquerschnittsfläche und Veränderung des Dispergensdurchflusses durch Einstellung der Größe der kleinsten Querschnittsfläche der Überschalldüse sowie mittels Veränderung von Durchflussmenge, Druck und Geschwindigkeit des Dispergensstrahls aus der Überschalldüse. Dabei wird die Umlaufgeschwindigkeit des Druckluftgebläses durch Gangumschaltung im Getriebe verändert.

Das Verfahren und die Einrichtung haben folgende Nachteile:
- eine beschränkte Beweglichkeit des Generators. Sie liegt daran, dass es nicht möglich ist, den Flüssigkeitsdruck der dem Dispergator zugeführten Flüssigkeit sowie die räumliche Ausrichtung der Überschalldüse während der Bewegung mit Hilfe des Fernbedienungspults schnell zu verändern. Das ist nur nach der Unterbrechung des Generatorbetriebs möglich;
- die Anwendung der hydraulischen Strahldüse zwecks Vorvernebelung der Flüssigkeit ist unrationell, da der Flüssigkeitszerstäubungswinkel sehr klein ist. Die Tropfen der zerstäubten Flüssigkeit werden dem dispersen Mediumstrahl gemäß einer Flugbahn unter einem kleinen Winkel (tangential) zur Strahlflugbahn und so gut wie in Satellitenrichtung zum Strahl zugeführt. Das bedingt eine niedrige Tropfengeschwindigkeit gegenüber dem Mediumstrahl und eine geringe Stoßenergie beim Zusammentreffen des Mediums und der Tropfen. Es geht also um einen niedrigen Nutzeffekt der aerodynamischen Dispergierung der Tropfen der vorvernebelten Flüssigkeit zum Aerosol;
- es gibt keine Möglichkeit, aktuelle Informationen über den Druck und die Flüssigkeitsdurchflussmenge, den Druck der komprimierten Luft nach dem Gebläse und den Filterverschmutzungsgrad schnell zu bekommen. Es ist daher auch keine Möglichkeit für eine Überwachung und eine schnelle Korrektur des Generatorbetriebs während der Bewegung gegeben;
- unzulängliche Einflussmaßnahmen im Zusammenhang mit der Aerosol-Dispersitätsregelung, die nur auf eine externe Einwirkung auf die Flüssigkeit beschränkt sind und nur hydraulische und aerodynamische Zerstäubung umfassen. Die aus der Praxis bekannten Innentropfen-Einwirkungsmaßnahmen sind Flüssigkeitserhitzung und -aeration;
- die Aufnahme eines Gebläses im Schmiersystem des Motors belastet aufs Höchste die Möglichkeiten dieses Systems, was mit hoher Wahrscheinlichkeit die Ausfallsgefahr beider Aggregate bedingt;
- die Anwendung des pneumatischen Systems des Fahrzeugs als Druckluftquelle beschränkt die Funktionalitäten des Generators;
- es gibt keine Rohrbelüfter zur Entfernung von Luftblasen aus den Knickstellen in Hauptleitungen für die Zuführung der Flüssigkeit zum Dispergator, was eine Störung seines gleichmäßigen Betriebs verursacht;
- die permanente kinematische Verkopplung zwischen dem Motor und der Pumpe erschwert den Motorstart.

Dieser bekannte Generator und das bekannte Verfahren sind der nächstkommende Stand der Technik für die Erfindung.

Der durch das SU-Erfinderzertifikat 633573 (25.11.78, IPC: B01 F 3/04, B01F 11/00) bekannte Mischer für Flüssigkeit und Gas weist ein Gehäuse mit Anschlüssen für eine Flüssigkeitszuführung und eine Gas-Flüssigkeitsmischungsableitung, eine Hohlwelle mit der Möglichkeit einer Hin- und Herbewegung für die Gaszuführung und einen daran befestigten Gasverteiler auf. Der Gasverteiler ist eine Hohlscheibe mit Löchern an ihren Stirnflächen. In diese Löcher sind gelochte Röhrchen zwischen den Oberflächen eingesteckt. Das Verfahren zur Sättigung der Flüssigkeit mit Gas umfasst die Versorgung des Mischers mit Flüssigkeit und Gas unter angepassten Druckwerten und die Erzeugung einer vergrößerten Kontaktoberfläche zwischen der Flüssigkeit und dem Gas, indem dieses Gas in Form von kleinen Bläschen zugeleitet wird. Diese Bläschen entstehen, wenn das Gas die Löcher der gelochten Röhrchen passiert. Am Anfang der Bläschenbildung entsteht eine Gaskaverne in der Flüssigkeit, die am Rand des Lochs geschlossen und daran durch die Kraft der Oberflächenspannung zurückgehalten wird. Danach wächst die Kaverne in ihrem Umfang, bis die Auftriebskräfte und die Kräfte der strömungsdynamischen Einwirkung auf die Kaverne der Flüssigkeitsströmung während der relativen Bewegung der Flüssigkeit entlang der gelochten Oberfläche dieser Kaverne am Loch abreißen. Das Abreißen erfolgt, indem die Kraft der Oberflächenspannung überwunden wird. Damit wird die Öffnung für die Bildung der nächsten Kaverne freigemacht. Die abgerissene Kaverne schließt sich mit der Bildung eines Bläschens ab, wobei seine Größe von der Geschwindigkeit der relativen Bewegung der Flüssigkeit direkt abhängt. Das Verfahren beinhaltet auch eine Vermengung von Flüssigkeit und Bläschen im Verteiler und die Erzeugung von einem dispersen und ziemlich homogenen Gleichgewichtssystem: Die Dispergens besteht aus Flüssigkeit und Gasbläschen, die im Flüssigkeitsumfang gleichmäßig verteilt sind. Die Mischung wird zum Austritt gefördert. Dabei löst sich ein Teil der Bläschen in der Flüssigkeit auf, und die anderen Bläschen vereinigen sich in Blasen, die sich oben im Mischer ansammeln.

Nachteile des Mischers und des Verfahrens sind:
- die Gasansammlung in Form von Blasen oben im Mischer und
- der Bedarf an zusätzlicher mechanischer Energiezuführung für die Vermengung.

Aus dem Stand der Technik ist eine regelbare Einrichtung zur chemischen Aerosolreagensbearbeitung der Innenoberfläche von Gasleitungen bekannt (Patent RU 2234380 C1, 20.08.2004, IPC: B05B 17/00). Die Einrichtung enthält einen Behälter mit chemischen Reagenzien, eine mit dem Gasleitungsraum verbundene Düse, ein System zur Versorgung der Düse mit chemischem Reagens einschließlich der Elemente, welche die Funktion des Systems sicherstellen: eine Anpress- und eine Dosierpumpe sowie ein externer elektrischer Oberflächenerhüzer. Am Eintritt der Dosierpumpe ist ein Mischer angeordnet. Der Oberflächenerhitzer dient zur Aufwärmung der Rohrleitung, welche die Mischung aus chemischem Reagens und Gas fördert, vor dem Gaseintritt in die Düse. Dabei ist der Mischer in Form eines senkrechten Zylindergehäuses ausgebildet. In dem Gehäuse ist eine geschlossene Kammer koaxial eingebaut. Die Kammer besteht aus einem feinporigen Material in der Form eines Hohlkegels, deren Verengung gleichsinnig mit der Strömung des chemischen Reagens in der Lücke zwischen der Kammer und dem Gehäuse gewendet ist. Dabei ist die Kammer an die Gasleitung über einen Gasdurchflussmengenregler angeschlossen. Die Lücke ist an das Versorgungssystems des chemischen Reagens mit einer Anpresspumpe angeschlossen. Die Versorgung erfolgt über einen Reagensmengenregler, der funktionell mit dem Gasdurchflussmengenregier verbunden ist.

Das mit Hilfe dieser Einrichtung ausgeführte Verfahren schließt folgende Vorgänge ein:
- die Förderung des chemischen Reagens aus dem Behälter in den Mischer mit Hilfe der Anpresspumpe;
- die Sättigung des chemischen Reagens mit dem Gas;
- die Beaufschlagung des Reagens-Gas-Gemisches mit einem Druck mit Hilfe der Pumpe, bis der vorgegebene Druck erreicht ist;
- die Förderung des Gemisches zur Düse;
- gleichzeitig damit wird das Gas aus der Gasleitung in den Gasmischer gefördert. Dabei ist der Gasdruck an den Druck des dem Mischer zugeführten chemischen Reagens im bestimmten Verhältnis angepasst;
- die Gasvermengung und -auflösung in dem chemischen Reagens;
- die Gemischerhitzung bis zur vorgegebenen Temperatur und
- der Anlauf der Gas-Dampf-Flüssigkeitsströmung bis zur Schallgeschwindigkeit und somit die Gemischdispergierung zum Aerosol, darunter mittels einer Gasdesorption aus dem chemischen Reagens und Einspritzung des gebildeten Aerosols aus der Düse in die Gasleitung.

Nachteile der bekannten Einrichtung und des Verfahrens sind:
- Die Aufstellung des Mischers am Eintritt der Dosierpumpe kann eine Pumpenbetriebsstörung verursachen, da kein Rohrbelüfter zur Entfernung von Gasblasen in den Knickstellen der Kanäle vorhanden ist;
- die manuelle Einstellung des Gas- und Reagensdruckverhältnisses am Eintritt in den Mischer;
- die Ungleichmäßigkeit der Erhitzung durch den externen Oberflächen-Gemischerhitzer vor der Düse;
- der hohe Grad der Aerosol-Polydispersität infolge der Wärmezufuhr vor dem Anfang der Gemischdispergierung.

Die bekannten Einrichtungen und Verfahren stellen den nächstkommenden Stand der Technik für die Erfindung dar.

Es ist Aufgabe der Erfindung:
- die Mobilität des Generators zu erhöhen, indem möglichst eine große Anzahl der eventuellen technischen Lösungen für seine optimale Fernüberwachung und Fernbedienung gefunden wird, um unfallsichere Arbeitsbedingungen für den Bediener zu schaffen. Dafür werden unmittelbare Kontakte des Bedieners mit den Stellorganen und den Systemen des Generators während seines Betriebs verhindert, die während der Regelungs- und Einstellungsvorgänge unvermeidlich sind;
- die Leistung und den Nutzeffekt beim Generatorbetrieb zu erhöhen, die gesetzmäßig durch seine erhöhte Beweglichkeit und seine optimale Fernbedienbarkeit bedingt sind. Das nicht vorgesehene Aussetzen des Generators zwecks Nachstellens seiner Systeme entfällt;
- die Notfälle bei der Funktion der Anlagen und der Vorrichtungen zu vermeiden, die eventuell ihren Ausfall verursachen können, und zwar dank einer ununterbrochenen Überwachung des Zustands und des Betriebs der Generatorsysteme und den rechtzeitig ergriffenen Maßnahmen, welche Unfällen, Notfällen und Störungen vorbeugen und die Systeme vor Überlastungen schützen. Darüber hinaus kann die verbesserte Beweglichkeit des Generators durch folgende Maßnahmen bedingt werden: die Möglichkeit der Fernüberwachung und -verfolgung der gewählten Taktik der Aerosolbearbeitung von Anlagen, Gelände und Gütern unter Berücksichtigung des Lufttemperaturgefäiles je nach Höhe, Windrichtung und Windstärke, den Wettervorhersagen für die nächsten 3 bis 4 Stunden; die Generatoranbindung je nach Windrichtung und Lage der zu bearbeitenden Anlage oder Güter; die Möglichkeit, die Ansammlungen von lebendigen Bearbeitungsobjekten in der Nacht zu identifizieren. Dabei werden auch solche Möglichkeiten beachtet wie computergestützte Datenauswertung, die Erfassung und die Verarbeitung von Daten und Kenngrö-βen, die für den Betrieb des Generators und seiner Systeme relevant sind sowie von verschiedenen Ergebnissen;
- solche Verfahren der Flüssigkeitsdispergierung mit Hilfe des Generators anzuwenden, welche die Steigerung von Nutzeffekt und die Wirksamkeit der Einwirkung des verordneten Präparats auf das Objekt der Aerosolbearbeitung sicherstellt;
- die Möglichkeiten des Generators zu erweitern, indem die evtl. erreichbare Aerosoldispersität dank der Anwendung der mehrdimensionalen Einwirkung auf die Flüssigkeit während ihrer Dispergierung erhöht wird. Das wird nicht nur durch die Verwendung von externen Wirkungen sondern auch unter Einsatz von sogenannten Innentropfen-Methoden erreicht. Die externen Wirkungen umfassen hydraulische Zerstäubung durch Anlauf und Wirbelung des Flüssigkeitsstroms unter Pressdruck, danach akustisches (Ultraschall-) Aufspalten der Tropfen der bereits atomisierten Flüssigkeit mit Hilfe von US-Wellen von Dispergens und schließlich eine abschließende aerodynamische Nachatomisierung der Tropfen zum Aerosol mit Hilfe eines Überschallstrahls von Dispergens, wobei der Strahldruck und die -geschwindigkeit regelbar sind. Die Innentropfen-Methoden tragen dazu bei, dass der Nutzeffekt der externen Wirkungen gesteigert wird. Sie umfassen die Vorsättigung der Flüssigkeit mit Druckluft in Form von gleichmäßig in deren Umfang verteilten Bläschen und eine Verminderung der Kräfte der Oberflächenspannung der Flüssigkeit, indem ihre Tropfen durch Dispergens-Wärme erwärmt werden. Dieses Ziel wird auch dadurch erreicht, dass das vorgegebene effektive Druckverhältnis zwischen der Druckluft und der damit gesättigten Flüssigkeit aufrechterhalten wird und dass der konstante Dispergensdruck und der aktuelle Flüssigkeitsdruck aufrechterhalten werden, wobei dieser Druck mittels Fernsteuerung korrigiert werden kann, um die eingestellte Flüssigkeitsdurchflussmenge zu verändern.

Die Aufgabe der Sicherstellung von unfallsicheren Arbeitsbedingungen für Bediener umfasst auch eine Regeneration, ohne dass die Filter demontiert und zerlegt werden. Dafür wird eine Druckluftspülung verwendet.

Die gestellten Aufgaben werden durch die Merkmale des Anspruchs 1 gelöst.

Das Verfahren geht von einem Stand der Technik aus, der umfasst:
- eine durchflussgeregelte Zuführung der Flüssigkeit unter konstantem Vorgabedruck,
- ihre Voratomisierung in einem hydraulischen Atomisator (Strahlzerstäuber) eines Dispergators über eine speziell geformte Ringdüse mit veränderbarer Querschnittsfläche,
- die Zuführung der voratomisierten Flüssigkeit zum Dispergensstrahl. Das Dispergens wird dabei im Gebläse bis zu einem Druckgefälle gepresst. Der Druck wird durch die Veränderung der Gebläsedrehzahl geregelt.
- Das Dispergens wird in den Dispergator gefördert und in einer Überschalldüse mit regelbarer kleinster Querschnittsfläche im Bereich von der Unter- bis zur Überschallgeschwindigkeit beschleunigt.
- Die voratomisierte Flüssigkeit wird endgültig aerodynamisch bis zum Aerosol-Zustand dispergiert. Die Aerosol-Dispersität wird mittels Veränderung des Flüssigkeitsdurchflusses, der Dispergensdurchflussmenge und des -drucks und folglich der Dispergensstrahlgeschwindigkeit aus der Überschalldüse, die das Aerosol zur Anwendungsstelle fördert, geregelt.

Die gestellte Aufgabe wird gemäß der Erfindung folgenderweise gelöst:

Das Dispersionsmedium wird im polytropen Prozess gepresst, wobei der Verdichtungswirkungsgrad im Bereich bis 2,2 liegt. Die Tropfen der voratomisierten Flüssigkeit werden in einem Fliehkraftzerstäuber durch die Dispergenswärme im Dispergensstrahl erwärmt. Die Tropfen werden in dem Dispergensstrahl über ein Feld von Dispergens-Ultraschallschwingungen (US) gefördert. Die US-Schwingungen werden von einem Hartmannschen Resonator generiert, welcher durch den Strahl erregt wird. Die Flüssigkeitsdurchflussmenge wird nicht nur mittels Veränderung der Durchflussquerschnittsfläche der speziell geformten Ringdüse des Fliehkraftzerstäubers geregelt, sondern auch mittels der Korrektur eines ständig aufrechterhaltenen aktuellen Flüssigkeitsdruckwerts sowie dadurch, dass die Flüssigkeit vor der Voratomisierung mit Druckluft in Form von gleichmäßig in deren Umfang verteilten Bläschen gesättigt wird. Dabei wird der Sättigungsluftdruck an den Druck der zu sättigenden Flüssigkeit angepasst. Die Menge der zur Sättigung geförderten Druckluft wird dabei an die Menge der zur Sättigung zugeführten Flüssigkeit angepasst, indem folgende Luftmengen gleich aufrechterhalten werden: die überflüssige und ins Freie abgeführte Luft und die Luft, welche aus der damit übersättigten Flüssigkeit ausgeschieden wird.

Der mobile Aerosolgenerator zur Generierung von Aerosolen mit einer regelbaren Dispersität mittels mehrdimensionaler Einwirkung ist dadurch gekennzeichnet, dass er auf einem Lastkraftwagen aufgestellt und an dessen Stromversorgungsnetz angeschlossen ist. Das Fernbedienungs- und -überwachungspult des Generators befindet sich im Fahrerhaus. Der Aerosolgenerator weist auf:
- einen Motor,
- eine Kupplung,
- zwei elektromechanische Antriebe zur Kupplungsbedienung und Steuerung der Kraftstoffversorgung des Motors,
- ein Wechselgetriebe als Antrieb für ein Dispersionsluftmediumgebläse. Der Verdichtungswirkungsgrad stellt das Mediumsdruckgefälle an der Überschalldüse bis zum überkritischen Niveau sicher. Das Schmiersystem des Wechselgetriebes ist ins Schmiersystem des Motors integriert,
- einen pneumatischen Dispergator mit einer regelbaren Dispersität. Der Dispergator hat eine Überschalldüse mit einstellbarer kleinster Querschnittsfläche und einen hydraulischen Strahlzerstäuber mit einer speziell geformten Ringdüse mit veränderbarer Durchflussquerschnittsfläche. Der Dispergator ist pneumatisch mit dem Gebläse über zwei Paarungsbögen verbunden. Die Bögen sind dabei in Bezug aufeinander und das Gebläse drehbar,
- drei Gefäße mit einer Arbeitsflüssigkeit,
- eine Pumpe, die vom Motor über ein Keilriemengetriebe antreibbar ist,
- eine Flüssigkeitsdruckleitung mit einem Absperrhahn,
- ein pneumatisches System mit einem einfach wirkenden Federspann-Druckluftzylinder eines Absperrantriebs,
- zwei elektrische Druckluftventile und
- ein Hydrauliksystem, welches flexible Schläuche, Filter, eine Absperrarmatur, Ablassventile und lokale Überwachungsgeräte einschließt.

Gemäß der Erfindung sind die gestellten Aufgaben auf folgende Weise gelöst:

Der pneumatische Dispergator mit einer regelbaren Dispersität enthält:
- einen koaxialen Fliehkraftzerstäuber mit einer speziell geformten Ringdüse. Die speziell geformte Ringdüse befindet sich an der Sperrstelle der Stirnfläche der Überschalldüse und
- einen Hartmannschen Resonator hinter dem Austritt des Fliehkraftzerstäubers.

Der pneumatische Dispergator hat die Möglichkeit, den Aerosolstrahl gemäß dem vorgegebenen Winkel innerhalb der oberen räumlichen Halbkugel auszurichten. Dies erfolgt unter der Fernüberwachung und der -bedienung dank dem Einbau von zwei elektromechanischen Antrieben an den Schnittstellen der Bögen miteinander und dem Gebläse, wobei die Antriebe mit Lagewinkelgebern ausgestattet sind. Die Pumpe ist vom Motor über ein Keilriemengetriebe antreibbar. Der Pumpenantrieb hat eine Übertragungswelle. An ihrem einen Ende ist eine Ölpumpe angeordnet. Am anderen Ende ist der Pumpenantrieb über eine gemeinsame Magnetkupplung und ein Keilriemengetriebe mit einem Verdichter und einer Pumpe mit jeweils einer individuellen Magnetkupplung verbunden. Das Gebläse-Schmiersystem weist eine Druckleitung von der Motorwanne bis zum Gebläse auf. Die Druckleitung schließt eine Ölpumpe, einen Filter mit einem Druckdifferenzmesser, einen Druckgeber, eine Ablassleitung vom Gebläse über das Wechselgetriebegehäuse bis zur Motorwanne und Rohrleitungen ein.

### Das Hydrauliksystem weist auf:

Eine Druckleitung von der Pumpe bis zum Absperrhahn einschließlich eines Nachdruckstellventils mit Ablass und einem elektromechanischen Antrieb zur Einstellung und Korrektur des vorgegebenen regelbaren Druckniveaus, eine Pumpe, ein Mittelfilter mit einem Druckdifferenzmesser, einen Druckgeber, ein Überdruckventil als Ablassventil, ein Feinfilter mit einem Druckdifferenzmesser, einen Strömungswächter, ein Rückschlagventil, eine Lufthaube, eine Absperrarmatur und Rohrleitungen, eine Ablassleitung vom Absperrhahn über das Rückschlagventil und die Rohrleitungen bis zur Eintrittsleitung. Die Eintrittsleitung verbindet die Gefäße mit Arbeitsflüssigkeit, die mit Siebkörben, Füllstandanzeigen und zwei von diesen Gefäßen auch mit Füll-, Spülungs- und Vermengungsanlagen ausgerüstet sind, mit einer Pumpe über das Grobfilter und beinhaltet Rohrleitungen und eine Absperrarmatur. Dabei gibt es einen Füllstutzen mit Siebkorb, eine Verbindung mit Ablass des Druckregelventils und mit Überdruckventil, eine Verbindung zwischen den Spül- und Vermengungssystemen und der Druckleitung. Außerdem weist das Druckluftsystem eine Luftleitung vom Verdichter bis zum Absperrhahn auf. Diese Luftleitung beinhaltet einen Verdichter, ein Rückschlagventil, einen Druckspeicher mit einem Druckgeber und einem Überdruckventil, ein Nachdruckregelventil, ein Filter, ein elektrisches Druckluftventil, einen einfach wirkenden Federspann-Druckluftzylinder, eine Absperrarmatur und Rohrleitungen. Dabei ist der Absperrhahn mit dem Fliehkraftzerstäuber des pneumatischen Dispergators mit einer regelbaren Dispersität mittels flexibler Schläuche und eines senkrechten Heberschlauchs mit einem oben angeordneten Schwimmernadelrohrbelüfter verbunden. Dabei stehen Druckgeber, Lagewinkelgeber, Druckdifferenzmesser, elektromechanische Antriebe, Magnetkupplungen und das elektrische Druckluftventil mit dem Fernbedienungs- und -überwachungspult in Verbindung.

Die gestellten Aufgaben können auch dadurch gelöst werden, dass der Generator einen Mischer einschließt. Der Mischer ist an seinem Eintritt mit einer Druckleitung und einer Flüssigkeitsversorgungsleitung mit einer Absperrarmatur und an seinem Austritt mit einer Rohrleitung zur Entnahme der gasgesättigten Flüssigkeit und einem Rückschlagventil mit einem Absperrhahn verbunden. Dabei ist die genannte Druckleitung mittels der Absperrarmatur vor dem Rückschlagventil mit einem Absperrhahn absperrbar. Dazu ist der Mischer zusätzlich mit der Hauptluftleitung mittels einer Luftleitung mit einem Rückschlagventil, einem Druckgeber, einer Anpassungsklappe, die zusätzlich an die Flüssigkeitsversorgungsleitung mittels einer Impulsleitung mit einem Druckgeber angeschlossen ist, einem elektrischen Druckluftventil und einer Absperrarmatur verbunden.

Dabei besteht der Mischer aus:
- einem senkrechten Zylindergehäuse mit Anschlüssen für die Flüssigkeitszuführung und die Entnahme der gasgesättigten Flüssigkeit,
- einem geschlossenen Hohlkegel aus feinporigem Material. Der Hohlkegel befindet sich koaxial im Gehäuse. Die Verengung des Hohlkegels ist nach oben ausgerichtet. Der Hohlkegel ist mit einer Luftleitung verbunden,
- einem Schwimmer mit einer Sammelleitung. Der Schwimmer ist unten mit einem Kolben des Lufteinlassventils mittels einer senkrechten Nadel verbunden. Der Kolben regelt den Durchlassquerschnitt. Das Lufteinlassventil ist mit einem Stutzen versehen. Oben ist der Schwimmer mit einem Kolben eines Belüftungsventils mittels eines Kardangelenks verbunden, wobei der Kolben den Durchlassquerschnitt regelt. Der Kolben beinhaltet einen mit dem Kolben verbundenen Beruhigungsraum und eine Drossel, die im Ventilgehäuse eingebaut sind. Dabei ist die Ventillage im Mischer axial regelbar. Das Anpassungsventil besteht aus einem trennbaren Hohlgehäuse mit Ein- und Austrittsanschlüssen, einer flexiblen Membran an der Trennstelle. Die Membran teilt das Gehäuse in einen Flüssigkeits- und einen Luftraum. Der Luftraum ist mittels einer Paarungsstelle zwischen dem Sitz und dem Kegel in zwei Räume - "vor" und "nach" dem Sitz - geteilt. Das eine Ende des Kegels ist mit der Membran verbunden. Das andere Ende (kolbenseitig) sitzt im Beruhigungsraum mit Drossel. Dabei kommunizieren diese Räume "vor" dem Sitz mit der Hauptluftleitung und "nach" dem Sitz mit dem Mischer. Der Flüssigkeitsraum kommuniziert mit der Flüssigkeitszuführungsleitung mittels einer Impulsleitung und weist ein regelbares Federwerk zur Membranvorspannung auf. Darüber hinaus sind der Druckgeber und das elektrische Druckluftventil mit dem Fernbedienungs- und -überwachungspult verbunden.

Die Aufgaben der Erfindung sind auch dadurch gelöst, dass der Generator mit einer mobilen fachspezifischen landwirtschaftlichen Wetterstation, einem Satellitennavigationssystem GPS (GLONASS), einem Personalrechner und einem Infrarotsuchscheinwerfer mit einem Winkelgeber ausgerüstet ist, der mit dem Fernbedienungs- und -überwachungspult verbunden ist.

Außerdem sind die Aufgaben der Erfindung dadurch gelöst, dass die Austritte der Grob-, Mittel- und Feinfilter über eine Absperrarmatur mittels einer Spülleitung mit der Hauptluftleitung und die Eintritte mittels einer Abflussleitung mit einem Schlammabscheider (Schmutzfänger) verbunden sind.

Die Erfindung wird anhand der Zeichnungen näher erläutert. Es zeigen:
- Fig. 1: ein Übersichtsbild der Anlage (Ausgestaltung 1),
- Fig. 2: ein Übersichtsbild (Ausgestaltung 2),
- Fig. 3: eine Gesamtansicht des Dispergators,
- Fig. 4: eine Gesamtansicht des Mischers,
- Fig. 5: eine Gesamtansicht des Anpassungsventils und

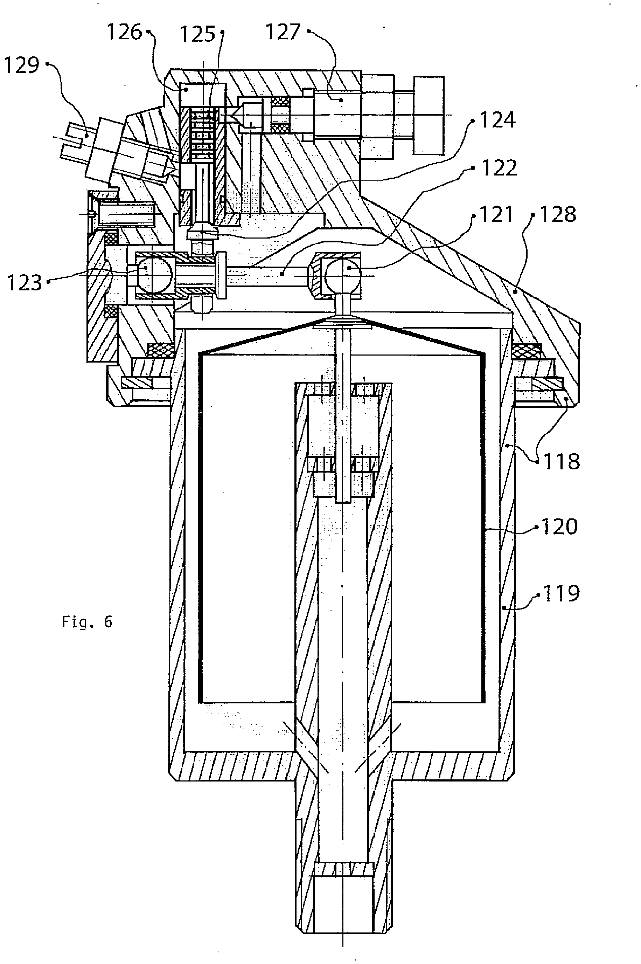

- Fig. 6: eine Gesamtansicht des Rohrbelüfters.

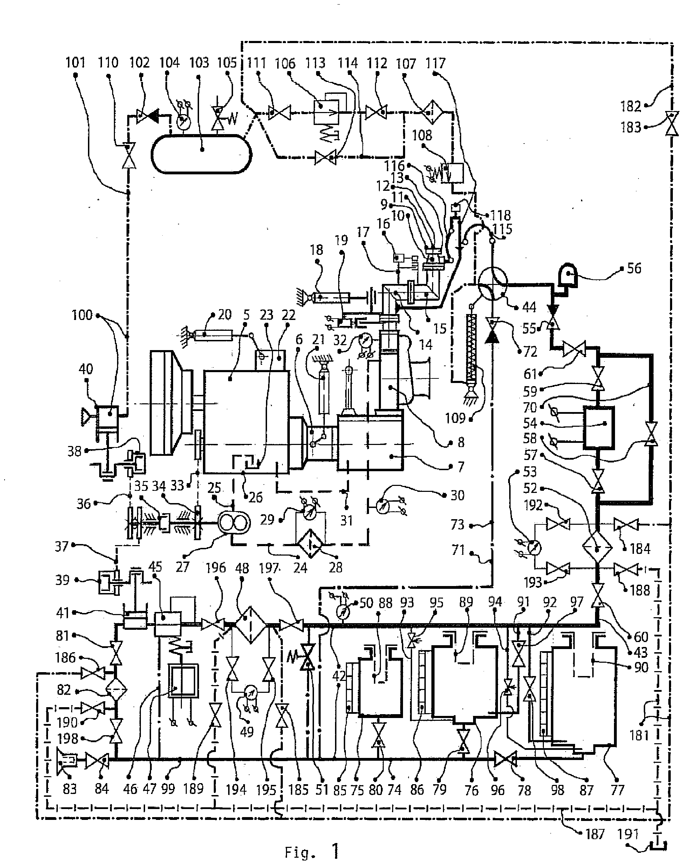

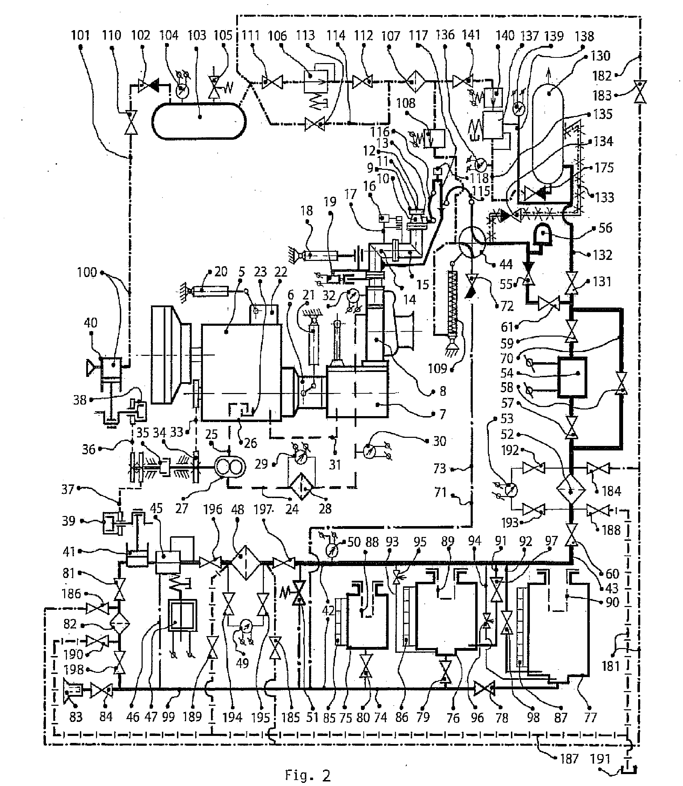

Der mobile Aerosolgenerator zur Generierung von Aerosolen mit einer regelbaren Dispersität mittels mehrdimensionaler Einwirkung gemäß Ausgestaltung 1 (nachfolgend "Generator") ist (s. Fig. 1) auf einem Lastkraftwagen 1 angeordnet. In seinem Führerhaus 2 ist ein Fernbedienungs- und -überwachungspult 3 angeordnet, welches an das Stromversorgungsnetz 4 des Fahrzeugs angeschlossen ist (Bezugszeichen 1, 2, 3, 4 sind in Fig. 1 und 2 nicht dargestellt). Der Generator enthält einen Motor 5 mit eigenem Kraftstoffversorgungssystem (unabhängiges Kraftstoffsystem) (in Fig. 1 und 2 nicht dargestellt), eine Kupplung 6 und ein Wechselgetriebe 7 als Antrieb für ein Gebläse 8 für das Dispersionsluftmedium. Der Verdichtungswirkungsgrad des Gebläses 8 stellt ein Druckgefälle bis zum überkritischen Niveau an einer Überschalldüse 9 eines pneumatischen Dispergators 10 mit einer regelbaren Dispersität sicher. Die Überschalldüse 9 hat die Möglichkeit, die kleinste Querschnittsfläche einzustellen. Im Dispergator 10 ist ein Fliehkraftzerstäuber 11 koaxial eingebaut. Am Austritt des Fliehkraftzerstäubers 11 befindet sich eine speziell geformte Ringdüse 12, deren Durchflussquerschnittsfläche veränderbar ist, um die Flüssigkeitsdurchflussmenge regeln zu können. Die Ringdüse 12 ist an der Sperrstelle zur Stirnfläche der Überschalldüse 9 hin angeordnet. Der Fliehkraftzerstäuber 11 ist mit einem dahinter und koaxial damit montierten Hartmannschen Resonator 13 ausgerüstet, welcher durch den Luftstrahl aus Überschalldüse 9 erregt wird. Der Dispergator 10 ist mit dem Gebläse 8 mittels zwei gepaarten Bögen 14 und 15 verbunden. Die Bögen 14 und 15 sind dabei in Bezug aufeinander und das Gebläse 8 drehbar. An den Verbindungsstellen der Bögen 14 und 15 und des Bogens 14 mit dem Gebläse 8 sind elektromechanische Antriebe 16 und 18 mit Lagewinkeigebern 17 und 19 eingebaut. Das ermöglicht eine Fernsteuerung der Ausrichtung des Aerosolstrahls unter einem beliebigen Winkel innerhalb einer oberen räumlichen Halbkugel. Elektromechanische Antriebe 20 und 21 dienen zur Fernbedienung eines Kraftstoffsystems 22 des Motors 5, um seine Drehzahl regeln zu können, sowie zur Fernein- und -abschaltung der Kupplung 6. Ein Schmiersystem 23 des Motors 5 beinhaltet auch das Schmiersystem des Gebläses 8. Das Schmiersystem 23 des Gebläses 8 besteht aus einer Druckleitung 24 mit einer Entnahmeleitung 25 von einer Wanne 26 des Motors 5 bis zum Gebläse 8, mit einer Ölpumpe 27, einem Feinfilter 28 und einem Druckdifferenzmesser 29, einem Druckgeber 30 und einer Abflussleitung 31 vom Gebläse 8 über das Wechselgetriebegehäuse 7 bis zur Wanne 26 des Motors 5. Auf dem Gebläse 8 ist ein Luftdruckgeber 32 angebaut. Eine Übertragungswelle 34 ist vom Motor 5 über ein Keilriemengetriebe 33 antreibbar. Ein Ende der Übertragungswelle 34 ist mit der Ölpumpe 27 verbunden. Das andere Ende ist über eine gemeinsame Magnetkupplung 35, Keilriemengetriebe 36 und 37 und individuelle Magnetkupplungen 38 und 39 mit einem Verdichter 40 und einer Pumpe 41 verbunden. Ein Hydrauliksystem 42 weist eine Druckleitung 43 zur Pumpe 41 bis zu einem Absperrhahn 44, ein Nachdruckregelventil 45 mit einem Ablass 46, einen elektromechanischen Antrieb 47 zur Einstellung eines Regelventils 45, die Pumpe 41, einen Mittelfilter 48 mit einem Druckdifferenzmesser 49, einen Druckgeber 50, ein Überdruckventil 51, ein Feinfilter 52 mit einem Druckdifferenzmesser 53, einen Strömungswächter 54, ein Rückschlagventil 55, eine Lufthaube 56 in Form eines hydropneumatischen membranlosen Speichers und Absperrarmaturen 57, 58, 59, 60 und 61, Rohrleitungen 70, eine Ablassleitung 71 vom Absperrhahn 44 über ein Rückschlagventil 72 und eine Rohrleitung 73 bis zu einer Eintrittsleitung 74 auf. Die Eintrittsleitung 74 verbindet ein Wassergefäß 75 und Gefäße 76 und 77 mit der Lösung der aktiven Substanz (Präparatslösungsgefäße) über Absperrarmaturen 78, 79, 80 und 81 und ein Filter 82 mit der Pumpe 41. Am freien Ende der Eintrittsleitung 74 ist ein Füllstutzen 83 mit einem Siebkorb und einer Absperrarmatur 84 angeordnet. Die Gefäße 75, 76 und 77 sind mit Füllstandsanzeigen 85, 86 und 87 und Siebkörben 88, 89 und 90 in ihren Mündungen ausgestattet. Die Gefäße 76 und 77 sind mit Einfüllsystemen 91 und 92 und Vermengungssystemen 93 und 94 mit Regelventilen 95 und 96 versehen. Die Füllsysteme 91 und 92 haben Absperrarmaturen 97 und 98 und sind an die Druckleitung 43 angeschlossen. Der Ablass 46 des Druckregelventils 45 und die Ablassöffnung des Überdruckventils 51 sind von der Eintrittsleitung 74 aus angeschlossen, die anhand einer Rohrleitung 99 ausgebildet ist. Ein Druckluftsystem 100 enthält eine Luftleitung 101 vom Verdichter 40 bis zum Absperrhahn 44, die den Verdichter 40, ein Rückschlagventil 102, einen Druckspeicher 103 mit einem Druckgeber 104 und einem Überdruckventil 105, einem Nachdruckregelventil 106, einem Filter 107, einem elektrischen Druckluftventil 108, einem einfach wirkenden Federspann- Druckluftzylinder 109 des Absperrantriebs 44, Absperrarmatur 110, 111, 112 und 113, Rohrleitungen 114 einschließt. Der Absperrhahn 44 ist mit dem Zerstäuber 11 des Dispergators 10 mittels flexibler Schläuche 115 und 116 und eines Hebers 117 mit einem SchwimmernadelRohrbelüfter 118 verbunden. Die Druckgeber 30, 32, 50 und 104, die Lagewinkelgeber 17 und 19, die Druckdifferenzmesser 29, 49 und 53, die elektromechanischen Antriebe 16, 18, 20, 21 und 47, die Magnetkupplungen 35, 38 und 39 und das elektrische Druckluftventil 108 sind mit dem Fernbedienungs- und -überwachungspult 3 verbunden.

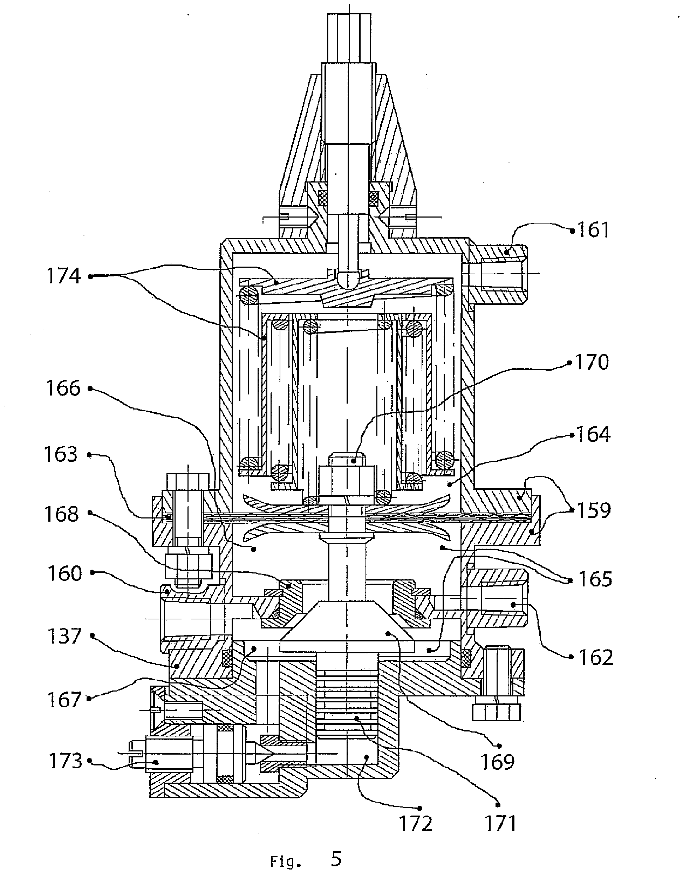

Der Rohrbelüfter 118 (s. Fig. 5) besteht aus einem Gehäuse 119, einem Glocken-Schwimmer 120 mit einem Kugelkopf 121, einem einarmigen Hebel 122, einem Kalottenlager 123 und einem Kolben 124 mit einem Hubkolbenende 125, welcher mit einem Beruhigungsraum 126 gepaart ist und der mit dem Hohlraum eines Gehäuses 119 mittels einer Drossel 127 verbunden ist, einem Deckel 128 und einer Austrittsdrossel 129.

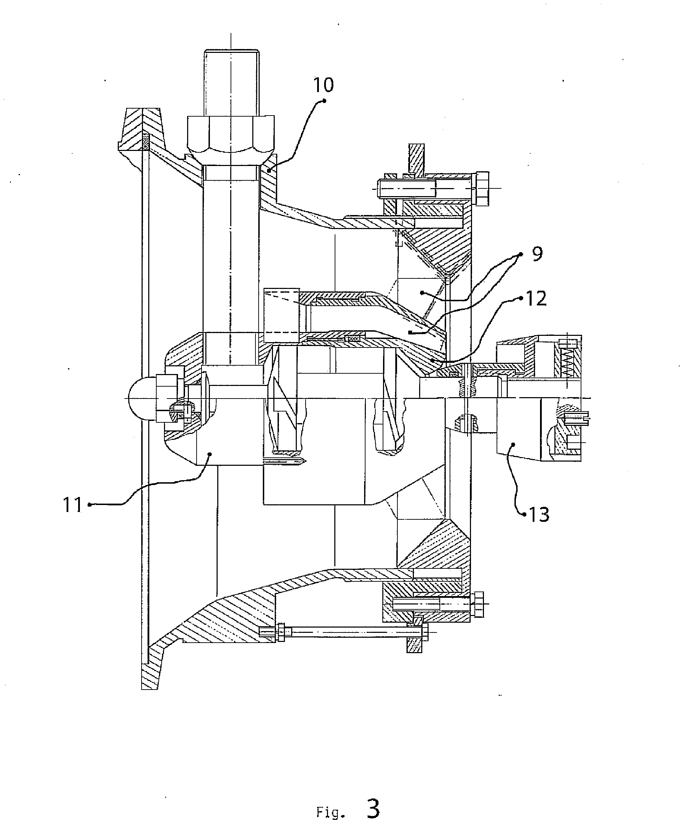

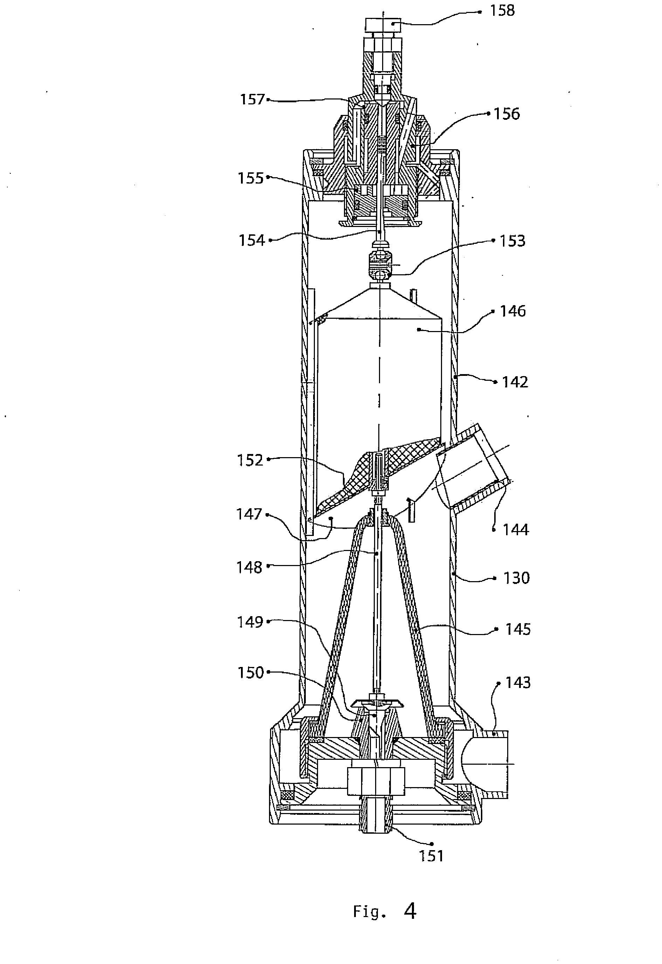

Gegenüber der Ausgestaltung 1 umfasst die Ausgestaltung 2 des Generators (s. Fig. 2) zusätzlich einen Mischer 130, dessen Eintritt über eine Absperrarmatur 131 mit einer Druckleitung 43, einer Flüssigkeitszuführungsleitung 132 verbunden ist und dessen Austritt über eine Rohrleitung 133 zur Entnahme der gasgesättigten Flüssigkeit und über ein Rückschlagventil 134 mit dem Absperrhahn 44 verbunden ist. Die Verbindung der Druckleitung 43 mit dem Absperrhahn 44 ist unmittelbar mittels der Absperrarmatur 61 abgesperrt. Der Mischer 130 ist auch mit der Hauptluftleitung 101 einer Luftleitung 135 verbunden. Die Luftleitung 135 beinhaltet eine Absperrarmatur 141, ein elektrisches Druckluftventil 140, einen Druckgeber 136 und ein Anpassungsventil 137, welches zusätzlich mittels einer Impulsleitung 138 an eine Flüssigkeitszuführungsleitung 132 mit einem Druckgeber 139 angeschlossen ist. Der Mischer 130 (s. Fig. 3) besteht aus einem senkrechten Zylindergehäuse 142 mit Anschlüssen 143 und 144 für eine Flüssigkeitszuführung 143 und für die Entnahme der gasgesättigten Flüssigkeit, einem im Gehäuse 142 koaxial angeordneten geschlossenen Hohlkegel 145 aus feinporigem Material, dessen Verengung nach oben ausgerichtet ist; einem entlang der Achse in Führungen bewegbaren Schwimmer 146 mit einem Sammelkanal 147. Dabei ist der Schwimmer 146 mittels einer mit dem Hohlkegel 145 koaxialen senkrechten Nadel 148 mit einem Kolben 149 verbunden, der den Durchlassquerschnitt regelt. Ein Lufteinlassventil 150 mit einem Einlassstutzen 151 vervollständigt den Schwimmer 146. Der Sammelkanal 147 ist der mit seiner Schale nach unten gebogene geneigte Boden 152 des Schwimmers 146. Der Anschluss 143 ist mit der Rohrleitung 132, der Anschluss 144 mit der Rohrleitung 133 und der Einlassstutzen 151 mit der Rohrleitung 135 verbunden. Der Schwimmer 146 ist oben mittels eines Kardangelenks 153 mit einem den Durchlassquerschnitt regelnden Kolben 154 eines Belüftungsventils 155 verbunden. Die Lage eines Ventilgehäuses 156 ist axial regelbar. Der Kolben 154 ist mit einem Beruhigungsraum 157 gepaart, welcher mit dem Hohlraum des Gehäuses 142 über eine Drossel 158 verbunden ist. Das Anpassungsventil 137 (s. Fig. 4) besteht aus einem Hohlgehäuse 159 mit Eintrittsanschlüssen 160 und 161 und mit einem Austrittsanschluss 162 sowie mit einer Membran 163 in der Trennstelle. Die Membran 163 teilt das Hohlgehäuse 159 in einen Flüssigkeitsraum 164 und einen Luftraum 165. Der Luftraum 165 ist in einen Raum 166 «hinter» und einen Raum 167 «vor» der Paarungsstelle zwischen einem Sitz 168 und einem Kegel 169 aufgeteilt. Ein Ende 170 des Kegels 169 ist mit der Membran 163 verbunden. Ein anderes hubkolbenseitiges Ende 171 sitzt in einem Beruhigungsraum 172 mit einer Drossel 173, welche den Beruhigungsraum 172 mit dem Raum 167 verbindet.

Der Flüssigkeitsraum 164 weist ein regelbares Federwerk 174 zur Vorspannung der Membran 163 auf. Die Eintrittsanschlüsse 160 und 161 sind jeweils an die Luftleitung 101 und die Impulsleitung 138 angeschlossen. Der Austrittsanschluss 162 ist an die Rohrleitung 135 angeschlossen. Der Druckgeber 139 und das elektrische Druckluftventil 140 sind mit dem Fernbedienungs- und -überwachungspult 3 verbunden. In der Luftleitung 135 zwischen dem Mischer 130 und dem Druckgeber 136 ist ein Rückschlagventil 175 eingebaut.

Der Generator (gemäß Ausgestaltungen 1 und 2) ist auch ausgerüstet:
- mit einer mobilen fachspezifischen landwirtschaftlichen Wetterstation 176. Die Wetterstation hat folgende Funktionen: Witterungsprognose für die nächsten 3 - 4 Stunden, Messungen des höhenbedingten Temperaturgradienten, von Druck und Luftfeuchtigkeit, Windstärke und -richtung;
- mit einem Satellitennavigationssystem GPS (GLONASS) 177 mit einem Algorithmus für die Anbindung des Generatorstandorts an die Windrichtung und die Lage des zu bearbeitenden Objekts;
- mit einem Infrarotsuchscheinwerfer 178 mit einem Winkelgeber 179 zwecks Erkennung der Lage von Ansammlungen lebendiger Objekte für eine Aerosolbearbeitung in der Nacht;
- mit einem Personalrechner 180.

Die Positionen 176, 177, 178, 179 und 180 sind mit dem Pult 3 verbunden. (Diese Positionen sind in Fig. 1, 2 nicht dargestellt.)

Der Generator (Ausgestaltungen 1 und 2) ist mit einem Reinigungssystem 181 zur Reinigung der Filter 48, 52 und 82 ausgerüstet. Das Reinigungssystem 181 beinhaltet eine Spülleitung 182. Die Spülleitung 182 verbindet die Austritte der Filter 48, 52 und 82 mit dem Druckspeicher 103 des Druckluftsystems 100 über Absperrarmaturen 183, 184, 185 und 186. Die Eintritte der Filter 48, 52 und 82 sind mittels einer Abflussleitung 187 über Absperrarmaturen 188, 189 und 190 mit einem Schmutzfänger 191 verbunden. Die Druckdifferenzmesser 49 und 53 sind mit Absperrarmaturen 192, 193, 194 und 195 ausgerüstet, die in den Impulsleitungen der Druckdifferenzmesser 49 und 53 installiert sind. Die Filter 48 und 82 sind zusätzlich mit Absperrarmaturen 196, 197 und 198 versehen.

Das Verfahren zur Flüssigkeitsdispergierung mit einer Aerosolbildung im dispersen Luftstrahl (Ausgestaltung 1) wird mit Hilfe eines Generators (Ausgestaltung 1) wie folgt ausgeführt: Das Dispersionsluftmedium (Luftdispergens) wird im Gebläse 8 bis zu einem solchen Druck verdichtet, welcher ein Druckgefälle bis zu einem überkritischen Niveau bis 2,2 an der Überschalldüse 9 des pneumatischen Dispergators 10 mit regelbarer Dispersität sicherstellt. Die Verdichtung (Kompression) erfolgt im polytropen Prozess, ohne dass ein Wärmeaustausch des verdichteten Mediums mit der Umwelt berücksichtigt wird. Die Reibungskräfte werden dagegen berücksichtigt. Unter Berücksichtigung der unvermeidlichen vernachlässigbar geringen Wärmeverluste gegenüber der Wärmemenge, die das Dispersionsmedium während seiner Verdichtung bekommt, sowie unter Berücksichtigung der Temperatursenkung des Mediums bei seiner Erweiterung ohne Ausführung jeglicher mechanischen Arbeit in der Überschalldüse 9 wird die Mediumstemperatur gemäß dem Joule-Thomson-Effekt im Strahl aus der Düse 9 bei überkritischer Druckdifferenz von 100 - 120° C unter Normalbedingungen betragen. Das Medium wird in der Düse 9 bis zur Überschallgeschwindigkeit beschleunigt. Die voratomisierte Flüssigkeit wird in dieses Medium im Fliehkraftzerstäuber 11 eingespritzt. Die Tropfen des Mediums passieren das Feld von Dispergens-Ultraschallschwingungen, die vom Hartmannschen Resonator erzeugt werden, bevor diese Tropfen in den Strahl eindringen. Der Resonator wird dabei durch den Dispergens-Strahl aus der Düse 9 erregt. Die Tropfen der durch den Fliehkraftzerstäuber 11 voratomisierten Flüssigkeit werden zum Aerosol mit geringem Polydispersitätsgrad mittels der Dispergens-Ultraschallschwingungen dispergiert. Danach wird das gebildete Aerosol dem Dispergensstrahl zugeführt. Hier wird ein beachtlicher konstitutiver Teil des polydispersen Aerosols anhand aerodynamischer Dispergensstrahleinwirkung zum homodispersen Aerosol im Rahmen des natürlichen selektiven Prozesses der Zerstörung von vorzugsweise großen Tropfen dispergiert. Der Nutzeffekt dieses Prozesses wird beachtlich erhöht, wenn zwecks Vorvernebelung der Flüssigkeit der Fliehkraftzerstäuber anstelle der aus dem Prototyp bekannten hydraulischen Strahldüse angewendet wird. Der Flüssigkeitszerstäubungswinkel im Fliehkraftzerstäuber erreicht 120° und mehr. Das bedingt die Zufuhr der Tropfen zum Mediumstrahl gemäß einer Flugbahn unter einem Winkel von 60° und höher zur Flugbahn des Luftstrahls. Die Tropfen haben eine möglichst hohe Geschwindigkeit in Bezug auf den Mediumsstrahl. In diesem Fall ist die Stoßenergie beim Zusammenstoß der Tropfen und des Mediums um eine Größenordnung höher, als es bei der Anwendung einer Strahldüse der Fall ist. Die Zerstörungswahrscheinlichkeit der großen Aerosoltropfen ist beachtlich höher als die Zerstörungswahrscheinlichkeit der kleinen. Das liegt daran, dass der Zerstörungsvorgang vom Maßstabfaktor, und zwar vom Verhältnis der Tropfenoberfläche zu ihrer Masse, stark beeinflusst wird. Die Aerosoltropfen werden durch den Dispergensstrahl aufgenommen, welcher während des Verdichtungsvorgangs erwärmt wird. Die Aerosoltropfen werden durch die Wärme des Mediums mit erwärmt. Als Ergebnis werden die Viskosität und die Oberflächenspannung der Flüssigkeit bedeutend kleiner. Das intensiviert den Dispergierungsvorgang des polydispersen Aerosols zum homodispersen Aerosol und vermindert endgültig den Polydispersitätsgrad von Aerosol und die durchschnittliche Aerosoltropfengröße bis zum Mindestmaß. Es sei bemerkt: Je größer die Aerosoltropfen, desto höher ist seine Geschwindigkeit zum Dispergens im Strahl (wegen des Maßstabfaktors), desto intensiver ist der Wärmeaustausch zwischen den Tropfen und dem Medium, desto höhere Temperatur wird bei seiner Erwärmung erreicht und desto geringer werden die Viskositäts- und die Oberflächenspannungswerte der Flüssigkeit. Das erhöht die Selektivität des Dispergierungsprozesses bei der Umwandlung des polydispersen Aerosols zum homodispersen Aerosol.

Als Ergebnis der mehrdimensionalen Einwirkung auf die Flüssigkeit im dispersen Luftstrahl ergibt sich:
- eine Flüssigkeitsvoratomisierung im Fliehkraftzerstäuber 11,
- eine Dispergierung der Tropfen der vernebelten Flüssigkeit mittels Dispergens-Ultraschallschwingungen, so dass Aerosol gebildet wird,
- eine Erhitzung der Aerosoltropfen mit Hilfe der Dispersionsmediumswärme und
- eine aerodynamische Dispergierung der Aerosoltropfen mittels des Mediumsstrahls.

Dabei wird Aerosol mit optimalen Dispersitätswerten und optimalem Homodispersitätsgrad hergestellt. Aus der Praxis ist bekannt, dass die Erhitzung der Aerosoltropfen durch die Dispergenswärme im Strahl und dass ihre nachfolgende Kühlung während der Verbreitung des Strahls durch die Umwelt keinen bemerkbaren Einfluss auf die Qualität der angewendeten Präparate, darunter auch auf die biologischen Präparate, ausübt, da der Erhitzungs-Kühlungs-Vorgang sehr schnell abläuft. Der Aerosolstrahl wird auf die Anwendungsstelle ausgerichtet. Dabei wird der Dispergator 10 in die benötigte Richtung mit Hilfe der elektromechanischen Antriebe 16 und 18 nach einem Kommando vom Pult 3 aus gedreht. Die Ausführung wird anhand der Anzeigen der Lagewinkelgeber 17 und 19 am Pult 3 überwacht. Diese Angaben werden mit den Angaben der Wetterstation 176 über Windstärke und -richtung, mit den Angaben des Winkelgebers 179 des Infrarotscheinwerfers 178, welcher über Nacht verwendet wird, den Angaben des GPS-Navigationssystems 177 über den Standort des Generators in Bezug auf das Bearbeitungsobjekt abgestimmt.

Die Aerosol-Dispersitätsregelung erfolgt mittels Veränderung der spezifischen Energie bei den Maßnahmen zur Einwirkung auf die Dispergierung, welche auf eine Flüssigkeitseinheit entfällt: die Regelung der Flüssigkeitsdurchflussmenge, die Veränderung der spezifischen hydraulischen Energie der Flüssigkeitsatomisierung durch den Fliehkraftzerstäuber 11, indem der ständig aufrechterhaltene vorgegebene Flüssigkeitsdruck abgebaut oder erhöht wird, und folglich indem die spezifische Schallenergie der Dispergens-Ultraschallschwingungen und der spezifischen pneumatischen Dispergensstrahlenergie verändert wird. Dabei kann die spezifische Druckluftenergie mittels Veränderung von Durchflussmenge, Druck, Geschwindigkeit des Dispergensstrahls aus der Düse 9 sowie mittels Veränderung der spezifischen Wärmeenergie des während des polytropen Verdichtungsprozesses erwärmten Dispergens verändert werden.

Die Flüssigkeitsdurchflussmenge wird dadurch geändert, dass die Durchflussquerschnittsfläche der speziell geformten Ringdüse 12 des Zerstäubers 11 unter konstantem Flüssigkeitsdruck verändert wird. Dabei ist die Veränderung der spezifischen Energien aller Einwirkungsmaßnahmen der Veränderung der Flüssigkeitsdurchflussmenge indirekt proportional. Die vorgegebene Flüssigkeitsdruckkonstanz wird von dem Nachdruckregelventil 45 aufrechterhalten. Die Flüssigkeitsdurchflussmenge wird bei konstanter Durchflussquerschnittsfläche der speziell geformten Ringdüse 12 des Zerstäubers 11 dadurch verändert, dass der aktuelle vorgegebene Flüssigkeitsdruck nach dem Nachdruckregelventil 45 verändert wird, indem die Einstellung dieses Ventils 45 mit Hilfe des elektromechanischen Antriebs 47 nach jeweiligen Kommandos vom Pult 3 unter Überwachung der Anzeigen des Druckgebers 49 korrigiert wird. Die spezifische hydraulische Energie der Flüssigkeitsatomisierung des Fliehkraftzerstäubers 11 steht in direkter Abhängigkeit vom Druck, und Durchflussmenge und Geschwindigkeit der Flüssigkeitstropfen aus dem Zerstäuber 11 sind vom Druckwert erhoben in die Potenz von 0,5 direkt abhängig. Deswegen ist der Einflussgrad bei der Veränderung des Flüssigkeitsdrucks auf die spezifische Energie der akustischen und pneumatischen Einwirkungen der Dispergierung beschränkt. Die Drehzahlveränderung des Gebläses 8 ergibt eine Veränderung der Durchflussmenge und des Drucks, weicher vom Pult 3 anhand des Druckgebers 32 überwacht wird, und bestimmt die polytrope Dispergenstemperatur und seine Strahlgeschwindigkeit. Die Drehzahlveränderung des Gebläses 8 wird mittels einer Drehzahlregelung und - kontrolle des Motors 5 mit Hilfe des elektromechanischen Antriebs 20 vom Pult 3 sowie mittels Umschaltung des Wechselgetriebes 7 erreicht. Die Variationen der Mediumsdurchflussmenge werden auch durch die Veränderung der kleinsten Querschnittsfläche der Überschalldüse 9 erzielt. Die Drehzahl des Gebläses 8 wird vom Pult 3 gemäß den Drehzahlen des Motors 5 überwacht und beeinflusst unmittelbar die spezifische Energie der akustischen, pneumatischen und thermischen Einwirkungen der Dispergierung auf das Aerosol. Die Kombination der vielen Maßnahmen zur Einwirkung auf die spezifische Energie der Flüssigkeitsdispergierung ermöglicht die Regelbarkeit innerhalb eines großen Dispersitätsbereichs und Homodispersitätsgrads von Aerosol.

Der Betrieb des Generators gemäß Ausgestaltung 1 wird auf folgende Weise durchgeführt:

Um den Motorstart zu erleichtern, wird er bei abgeschalteter Kupplung 6, Pumpe 41 und Verdichter 40 mittels der Magnetkupplung 35 vorgenommen. Der Verdichter 40 und die Pumpe 41 können ggf. beim Antrieb des Motors 5 jeweils individuell mit Hilfe der Magnetkupplungen 38 und 39 zu- oder abgeschaltet werden. Die Ölpumpe 27 des Ölsystems 24 des Gebläses 8 ist ständig an den Motor 5 angeschlossen, und ihre Funktion wird am Pult 3 anhand der Anzeigen des Druckgebers 30 überwacht. Die Funktionsfähigkeit des Feinfilters 28 wird am Pult 3 anhand der Anzeigen des Druckdifferenzmessers 29 überwacht. Die Pumpe 41 versorgt die Druckleitung 43 des hydraulischen Systems 42 über das Nachdruckregelventil 45, welches einen vorgegebenen Flüssigkeitsdruck konstant erhält. Dabei ist es möglich, den Druck vom Fernbedienungspult 3 aus mittels des elektromechanischen Antriebs 47 zu korrigieren. Die laufenden Werte werden anhand der Anzeigen des Druckgebers 50 am Pult 3 kontrolliert. Die überflüssige Flüssigkeit wird über das Nachdruckventil 45 bei seinem Betrieb und über den Abfluss 46 in die Eintrittsleitung 74 abgeführt. Nach dem Nachdruckventil 45 ist in der Druckleitung 43 das Mittelfilter 48 eingebaut. Seine Leistungsfähigkeit wird anhand der Anzeigen des Druckdifferenzmessers 49 am Pult 3 überwacht. Die Pumpe 41 und die Druckleitung 43 werden vor Überlastungen mit Hilfe des Überdruckventils 51 geschützt. Die Flüssigkeit wird dadurch in die Eintrittsleitung 74 abgeführt.

Die Pumpe 41 wird von den Gefäßen 75, 76 und 77 mit Arbeitsflüssigkeit über die Eintrittsleitung 74 versorgt. Die Gefäße 76 und 77 dienen dazu, die Lösung des aktiven Präparats zuzubereiten. Das aktive Präparat wird über die Siebkörbe 89 und 90 in die Gefäßmündungen 76 und 77 eingefüllt und mit einem Lösemittel (Wasser, Dieselöl usw.) über die Einfüllsysteme 91 und 92 über die Druckleitung 43 mittels der Pumpe 41 aus dem Einfüllstutzen 83 und über das Filter 82 verdünnt. Das Gefäß 88 dient als Wasservorratsbehälter. Mit diesem Wasser werden die Generatorsysteme nach dem Betrieb gespült, um die Präparatsreste zu entfernen.

Der Flüssigkeitsstand in den Gefäßen 88, 89 und 90 wird anhand der Standanzeiger 85, 86 und 87 überwacht. Die Gefäße 76 und 77 sind mit Vermengungssystemen 93 und 94 ausgerüstet, um eine Schichtenbildung der Lösung und einen Ausfall des Präparats zu vermeiden. Die Vermengungssysteme 93 und 94 werden von der Druckleitung 43 über die Regelventile 95 und 96 versorgt. Die Flüssigkeit wird mittels der Pumpe 41 über die Druckleitung 43 nach dem Mittelfilter 48 zum Feinfilter 52 hin gefördert. Die Leistungsfähigkeit wird anhand der Anzeigen des Druckdifferenzmessers 53 am Pult 3 kontrolliert. Danach wird die Flüssigkeit über den Durchflussgeber 54 zum Absperrhahn 44 gefördert. Die Lufthaube 56 ist in der Druckleitung 43 vor dem Absperrhahn 44 und hinter dem Rückschlagventil 55 angeordnet und dient dazu, Druckstößen im hydraulischen System 42 vorzubeugen. Ist der Absperrhahn 44 geöffnet, wird die Flüssigkeit über die flexiblen Schläuche 115 und 116, den senkrechten Heber 117 mit dem Rohrbelüfter 118 oben drauf in den Fliehkraftzerstäuber 11 des Dispergators 10 gefördert. Der Rohrbelüfter 118 (s. Fig. 5) dient dazu, Luftblasen aus der Flüssigkeit zu entfernen, da sie den Betrieb des Fliehkraftzerstäubers 11 stören können. Der Beruhigungsraum 126 mit der Drossel 127 des Rohrbelüfters 118 ist dafür vorgesehen, die axialen Schwingungsbewegungen der Glocke des Schwimmers 120 zu dämpfen. Der einarmige Hebel 122 und die Austrittsdrossel 129 dienen dazu, die Belastung des Glockenschwimmers 120 zu vermindern. Wird der Absperrhahn 44 mit Hilfe des Druckluftzylinders 109 um 90° gedreht, so wird der Flüssigkeitsstrom an den Fliehkraftzerstäuber 11 gesperrt und durch die Abflussleitung 71 über das Rückschlagventil 72 in die Eintrittsleitung 74 zum Eintritt der Pumpe 41 gefördert. Die Druckluft wird vom Verdichter 40 in den Fliehkraftzerstäuber 11 gefördert. Die Präparatreste werden aus dem Fliehkraftzerstäuber 11 mittels Druckluftspülung entfernt.

Die Luft im Druckspeicher 103 wird mit Hilfe des Verdichters 40 bis zum vorgegebenen Druck gespeichert. Dieser Druck wird anhand der Anzeigen des Druckgebers 104 am Pult 3 überwacht. Nachdem der vorgegebene Druck erreicht ist, wird der Verdichter 40 anhand der Magnetkupplung 38 vom Keilriemengetriebe 36 nach dem Kommando vom Fernbedienungs- und -steuerungspult 3 automatisch ausgeschaltet und, wenn der Druck unter den zulässigen Grenzwert fällt, automatisch eingeschaltet. Im Notfall wird die überflüssige Luft über das Überdruckventil 105 abgelassen. Die Luft wird aus dem Druckspeicher 103 über das Nachdruckregelventil 106, welches den konstanten Vorgabedruck aufrechterhält, und über das Filter 107 und das elektrische Druckluftventil 108 zum Absperrhahn 44 und dem Druckluftzylinder 109 gefördert. Ein Befehl vom Pult 3 löst das elektrische Druckluftventil 108 aus. Die Luft strömt in den Druckluftzylinder 109, welcher den Absperrhahn 44 um 90° drehen lässt. Dadurch wird der Druckluftzugang zum Fliehkraftzerstäuber 11 des Dispergators 10 geöffnet, um den Fliehkraftzerstäuber 11 zu spülen. Gleichzeitig wird der Flüssigkeitsstrom aus der Druckleitung 43 über die Abflussleitung 71 in die Eintrittsleitung 74 umgeleitet. Wird das elektrische Druckluftventil 108 ausgeschaltet, so lässt der einfach wirkende Federspann-Druckluftzylinder 109 den Absperrhahn 44 drehen, macht somit den Flüssigkeitszugang aus der Druckleitung 43 zum Fliehkraftzerstäuber 11 frei und sperrt den Druckluftzugang zum Fliehkraftzerstäuber 11 aus dem Druckspeicher 103 ab.

Danach werden die Absperrarmaturen 97, 98, 79, 78 und 84 und die Regelventile 95 und 96 abgesperrt und die früher geschlossene Absperrarmatur 80 geöffnet. Das Wasser wird aus dem Gefäß 75 mit Hilfe der Pumpe 41 gefördert, um den Fliehkraftzerstäuber 11 und die Generatorsysteme zu spülen und Präparatreste zu entfernen.

Das Lösungsmittel wird in die Gefäße 76 und 77 über die Füllstutzen 83 mit Hilfe der Pumpe 41 eingefüllt. Dafür werden die Absperrarmaturen 60, 78, 79 und 80 zu- und die Absperrarmaturen 97, 98 und 84 und die Regelventile 95 und 96 aufgemacht.

Das Verfahren zur Flüssigkeitsdispergierung mit Aerosolbildung im dispersen Luftstrahl gemäß der 2. Ausgestaltung wird mit Hilfe des Generators (nach Ausgestaltung 2) ähnlich wie bei Ausgestaltung 1 durchgeführt, ausgenommen davon ist jedoch, dass die Flüssigkeit mit Druckluft aus dem Druckspeicher 103 vor der Voratomisierung im Fliehkraftzerstäuber 11 gesättigt wird. Die Druckluft wird der Flüssigkeit in Form von in ihrem Umfang gleichmäßig verteilten mikroskopischen Bläschen zugeführt. Sie entstehen an der Außenoberfläche des Hohlkegels 145 des Mischers 130 und werden danach mit dem Flüssigkeitsstrom im Kreiskanal zwischen dem Hohlkegel 145 und dem Gehäuse 142 des Mischers 130 fortgetragen. Ein Teil der Luftbläschen schafft es, sich in der Flüssigkeit vor der Atomisierung aufzulösen. Wenn die Flüssigkeit in Tropfen dispergiert wird, so reißt die sich aus der Flüssigkeit bei ihrem akuten Druckabbau ausscheidende Luft die Tropfen, welche bei der Fliehkraftzerstäubung der Flüssigkeit gebildet werden, in noch kleinere Tropfen auf. Das trägt der Aerosolbildung insgesamt und der selektiven Dispergierung des polydispersen Aerosols zum homodispersen Aerosol bei. Die größeren Flüssigkeitstropfen werden durch die sich daraus ausscheidende Luft viel früher als die kleineren zerstört, da infolge des Maßstabfaktors mehr Druckluftenergie der sich ausscheidenden Druckluft auf ihre Flächeneinheit entfällt.

Der Generator gemäß der Ausgestaltung 2 wird hinsichtlich der Sättigung der Flüssigkeit mit Druckluft wie folgt betrieben: Die Druckluft wird aus dem Druckspeicher 103 in den Mischer 130 über das Anpassungsventil 137 gefördert. Das Anpassungsventil 137 sorgt dafür, dass der Luftdruck vor dem Mischer 130 den Flüssigkeitsdruck der in den Mischer 130 geförderten Flüssigkeit stets um einen vorgegebenen Wert überschreitet. Diese Druckdifferenz ist erforderlich, um die hydraulischen Luftdruckverluste in den Kanälen und den Einrichtungen des Mischers 130 auszugleichen, den Nutzeffekt der Lufteindringung in die Flüssigkeit sicherzustellen und die Zuführung überflüssiger Luft zu vermeiden. Die Druckluft wird durch die Mikroporen des Materials des Hohlkegels 145 durchgedrückt und bildet somit auf seiner Außenfläche Mikrokavernen in der Flüssigkeit. Diese Mikrokavernen schließen sich an den Rändern der Mikroporen ab. Die Mikrokavernen werden an den Mikroporen durch die Benetzbarkeit des Materials und die Kraft der Oberflächenspannung der Flüssigkeit zurückgehalten. Die Größe der Mikrokavernen nimmt zu, bis die Auftriebskraft und der Flüssigkeitsstromanfall in dem Kreiskanal zwischen dem Gehäuse 142 und dem Hohlkegel 145 diese Mikrokaverne von der Oberfläche des Hohlkegels 145 abreißen und bis die Mikrokavernen sich zu Luftmikrobläschen verschließen. Die Mikrobläschen werden kettenweise nach oben getrieben. Die Verjüngung des Hohlkegels 145 beugt ihrer Vereinigung vor. Dadurch entsteht die Gefahr, dass die Bläschengröße zunimmt. Die Strömungsgeschwindigkeit hat einen direkten Einfluss auf die Maße der Luftmikrobläschen.

Die Flüssigkeit mit den gleichmäßig in ihrem Umfang verteilten Druckluft- Mikrobläschen kommt mit einer Wendung über den Entnahmeanschluss 144, die Rohrleitung 133 und durch den Absperrhahn 44 in den Fliehkraftzerstäuber 11. Wenn der Flüssigkeitsstrom eine Wendung macht, werden große Luftbläschen abgesondert, im Sammelkanal 147 gesammelt und in die Lücke zwischen dem Schwimmer 146 und dem Gehäuse 142 nach oben abgeleitet, wo sie eine Luftansammlung (Luftblase) bilden.

Der Schwimmer 146 dient dazu, die gleichen Luftmengen stets aufrechtzuerhalten. Es geht dabei um die überflüssige und über das Belüftungsventil 155 ins Freie abgeführte Abluft einerseits und um die Luft, die andererseits aus der übersättigten Flüssigkeit ausscheidet. Somit wird die Menge der zur Sättigung zugeführten Druckluft an die zur Sättigung vorgesehene Flüssigkeitsmenge in Übereinstimmung mit dem vorgegebenen Verhältnis ihrer Durchflussmengen angepasst.

Wird dieses vorgegebene Verhältnis dadurch gestört, dass die Luftdurchflussmenge erhöht wird, so wird auch die Luftblase größer. Der Schwimmer 146 wird etwas versinken. Dadurch wird die Menge der über das Einlassventil 150 einströmenden Luft vermindert, und der Durchfluss der ins Freie über das Belüftungsventil 155 abgelassenen Luft wird vergrößert.

Als Ergebnis wird das vorgegebene Verhältnis wiederhergestellt. Ein ähnlicher Ablauf aber in umgekehrter Richtung liegt vor, wenn das Verhältnis in anderer Richtung gestört wird. Dabei ist, um die eventuellen axialen Schwingungen des Schwimmers 146 zu dämpfen, der Beruhigungsraum 157 mit der Drossel 158 vorgesehen. Der Beruhigungsraum 157 ist mit dem Kolben 154 zusammengepasst. Außerdem dient der Beruhigungsraum 157 dazu, den Kolben 154 während des Betriebs axial zu entlasten. Das Gehäuse 156 des Belüftungsventils 155 ist axial verschiebbar ausgebildet. Dies ermöglicht es, das vorgegebene Durchflussmengenverhältnis der dem Mischer 130 zugeführten Arbeitsmedien - der Sättigungsluft und der damit zu sättigenden Flüssigkeit - zu regeln.

Die Funktion des Anpassungsventils 137 ist der Funktion des aus dem Stand der Technik bekannten und mit konstantem Druck betriebenen Druckbegrenzungsventils ähnlich. Der Unterschied besteht jedoch darin, dass der Flüssigkeitsdruckimpuls in den Raum mit dem darin angeordneten regelbaren Federwerk 174 zur Vorspannung der Membran163 gegeben wird. Dieser Flüssigkeitsdruckimpuls wird über die Impulsleitung 138 aus der Zuführungsleitung 132 mit der zu sättigenden Flüssigkeit geliefert. Der auf die Membran 163 einwirkende Flüssigkeitsdruck sowie die darauf durch das Federwerk 174 ausgeübte Kraft legen den Druckwert der dem Mischer 130 zwecks Sättigung zugeführten Luft fest. Dieser Luftdruck überschreitet den Druck der Flüssigkeit, welche in den Mischer 130 gefördert wird, um mit Luft gesättigt zu werden, um einen bestimmten Vorgabewert.

Die Größe der vorgegebenen Luftdrucküberschreitung wird mittels Regelung des Federwerks 174 eingestellt und konstant aufrechterhalten, und zwar ungeachtet der Flüssigkeitsd ruckschwankungen.

Der mit dem Hubkolbenende 171 des Kegels 169 zusammengepasste Beruhigungsraum 172 mit der Drossel 173 gleicht eventuelle Druckdifferenzschwankungen aus. Die Druckdifferenzen werden anhand der Anzeigen der Druckgeber 136 und 139 vom Pult 3 aus überwacht.

Die Förderung von Aerosol zur Anwendungsstelle/zum Objekt der Anwendung wird auf folgende Weise durchgeführt:

Zuerst wird der Standort des Anwendungsobjekts visuell bestimmt. Wird die Aerosolbearbeitung z. B. zwecks Bekämpfung von Heuschrecken oder anderen Schwarminsekten geplant, so werden die Suche und Lagebestimmung normalerweise nachts mit Hilfe des Infrarot-Suchscheinwerfers 178 vorgenommen. Das liegt daran, dass die Aerosolbearbeitung von lebendigen Objekten in der Regel nachts durchgeführt wird. Danach wird der Aerosolstrahl aus dem Dispergator 10 auf das Anwendungsobjekt mittels der elektromechanischen Antriebe 16 und 18 mit den Lagewinkelgebern 17 und 19 ausgerichtet, indem der Dispergator 10 gemäß dem Befehl vom Fernbedienungs- und -überwachungspult 3 aus in die erforderliche Richtung gewendet wird. Die erforderliche Richtung wird vom Personalrechner 180 vorgegeben.

Die erforderliche Richtung wird am PC 180 mittels der Analyse und der Synthese folgender Daten bestimmt:
- die Daten der Wetterstation 176: das höhenbedingte Lufttemperaturgefälle, die Windstärke und -richtung, die Luftfeuchtigkeit und der atmosphärische Druck usw.;
- die Anbindung an die Windrichtung und -stärke;
- die Anbindung an den Generatorstandort gegenüber der Lage des zu bearbeiten-den Geländes, des Anwendungsobjekts, den Abmessungen des Objekts. Diese Anbindungen werden mit Hilfe des Satellitennavigationssystems GPS (GLONASS) 177 durchgeführt;
- die Geschwindigkeit des Generators, welche gemäß dem Bearbeitungsplan auf dem jeweiligen Objekt (Anlage, Güter usw.) vorgegeben wird.

Die Reinigung der Filter 48, 52 und 82 erfolgt nach der Stillsetzung des Generators. Die Absperrarmaturen 196, 197, 57, 58, 60, 81 und 198 werden zugemacht. Dadurch werden die Filter 48, 52 und 82 von den Hauptleitungen 43 und 74 abgesperrt. Die Absperrarmaturen 192, 193, 194 und 195 werden zugemacht, um die Verschmutzung der Druckdifferenzmesser 49 und 53 zu vermeiden. Die Absperrarmaturen 188, 189 und 190 werden aufgemacht, um die Filter 48, 52 und 82 über die Abflussleitung 187 mit dem Schmutzfänger 191 zu verbinden. Die Absperrarmatur 183 wird aufgemacht, um den Druckspeicher 103 direkt mit der Spülleitung 182 zu verbinden. Nach der Reinigung werden die Absperrarmaturen 188, 185 und 186 der Reihe nach (aufeinander folgend) auf- und zugemacht, um die Filter 48, 52 und 82 in der der Filterung entgegengesetzten Richtung mit Druckluft folgerichtig durchzublasen. Der Schmutz wird im Schmutzfänger 191 angesammelt.

Die Anwendung der Erfindung in der Praxis ermöglicht es, einen bedienungs- und funktionsmäßig hochwirksamen und betriebsmäßig zuverlässigen beweglichen (mobilen) Aerosolgenerator mit regelbarer Dispersität (AGRD) herzustellen. Dieser sollte imstande sein, die Aerosolbearbeitung von Anwendungsobjekten wie Anlagen, Güter in Land- und Forstwirtschaft, Viehwirtschaft, Brandbekämpfung, Geländeentaktivierung nach bakteriologischer, chemischer und radioaktiver Verseuchung sowie bei der bei der Sanierung und Beseitigung der Folgen von biologischen und technischanthropogenen Katastrophen und Notfällen effizient, mit hoher Qualität und Leistung durchzuführen.

## Patentansprüche

1. Verfahren zur Flüssigkeitsdispergierung mit einer Aerosolbildung in einem dispersen Luftstrahl einschließlich
- der Zuführung einer durchflussgeregelten Flüssigkeit unter einem konstanten Vorgabedruck,
- ihrer Voratomisierung in einem hydraulischen Strahlzerstäuber (11) eines Dispergators (10) über eine spezielle Ringdüse (12) mit einer veränderbaren Querschnittsfläche,
- der Zuführung der voratomisierten Flüssigkeit in einen Dispergensstrahl, wobei das Dispergens mit einem Druck in ein Gebläse gepresst wird, der durch die Veränderung der Drehzahl des Gebläses geregelt wird,
- der Zuführung des Dispergens in den Dispergator (10), in dem das Dispergens über eine Überschalldüse (9) mit regelbarer Querschnittsfläche im Bereich zwischen einer Unter- und Überschallgeschwindigkeit beschleunigt wird, um die voratomisierte Flüssigkeit endgültig aerodynamisch zu einem Aerosol zu dispergieren, wobei die Dispersität des Aerosols mittels einer Veränderung des Flüssigkeitsdurchflusses, der Dispergensdurchflussmenge, des Dispergensdrucks und damit der Strahlgeschwindigkeit des Dispergens aus der Überschalldüse (9), welche das Aerosol zur Anwendungsstelle fördert, geregelt wird,
**dadurch gekennzeichnet,**
**dass** das Dispergensmedium in einem polytropen Prozess gepresst wird, wobei der Verdichtungswirkungsgrad im Bereich bis 2,2 liegt,
**dass** die Tropfen der in einem als Fliehkraftzerstäuber (11) ausgebildeten Strahlzerstäuber voratomisierten Flüssigkeit durch die Dispergenswärme im Strahl erwärmt werden, wobei die Tropfen des Dispergensstrahls über ein Feld von Dispergens-Ultraschallschwingungen (US-Schwingungen) geleitet werden, die von einem Hartmannschen Resonator (13) erzeugt werden, der von dem Dispergensstrahl erregt wird und
**dass** die Flüssigkeitsdurchflussmenge nicht nur durch Veränderung der Durchflussquerschnittsfläche der speziell geformten Ringdüse (12) des Fliehkraftzerstäubers (11) sondern auch durch Korrektur eines vorgegebenen und danach konstant aufrechterhaltenen Niveaus des aktuellen Flüssigkeitsdrucks beeinflusst wird.

2. Verfahren nach Anspruch 1,
**dadurch gekennzeichnet,**
**dass** die Flüssigkeit vor der Voratomisierung mit Druckluft in Form von gleichmäßig im Umfang verteilten mikroskopischen Bläschen gesättigt wird, wobei der Sättigungsdruck an den Druck der zu sättigenden Flüssigkeit und an die Menge der zur Sättigung geförderten Druckluft, und zwar gemäß einem vorgegebenen Verhältnis ihrer Durchflussmengen, angepasst wird und
**dass** die Luftmengen, d. h. die überflüssige und ins Freie abgeführte Luft und die aus der übersättigten Flüssigkeit ausgeschiedene Luft, gleich aufrechterhalten werden.

3. Mobiler Aerosolgenerator, der mittels einer mehrdimensionalen Einwirkung einer Dispersität regelbar, auf einem Lastkraftwagen (1) aufgebaut und an dessen Stromversorgung angeschlossen ist, wobei ein Fernbedienungs- und - überwachungspult (3) eines Generators im Fahrerhaus angeordnet ist und der Aerosolgenerator einen Motor (5), eine Kupplung (6), zwei elektromechanische Antriebe (16, 18) zur Bedienung der Kupplung (6) und zur Steuerung der Kraftstoffversorgung (22) des Motors (5), ein Wechselgetriebe (7) als Antrieb für ein Dispersionsluftmedium-Gebläse (8) aufweist, wobei an einer Überschalldüse (9) ein Mediumdruckgefälle mit einem Wirkungsgrad bis zu einem überkritischen Niveau sichergestellt ist, wobei das Schmiersystem (23) des Gebläses (8) in das Schmiersystem des Motors (5) integriert ist, wobei ein pneumatischer Dispergator (10) mit regelbarer Dispersität mit der Überschalldüse (9) mit einstellbarer Querschnittsfläche und eine speziell geformte Ringdüse (12) im hydraulischen Fliehkraftzerstäuber (11) mit veränderbarer Durchflussquerschnittsfläche vorgesehen ist, wobei der Dispergator (10) pneumatisch mit dem Gebläse (8) über zwei Bögen (14, 15) verbunden ist; die im Bezug zueinander und im Bezug zum Gebläse (8) verdrehbar sind, dass drei Gefäße (75, 76, 77) mit einer Arbeitsflüssigkeit; eine Pumpe (27), die vom Motor (5) über ein Keilriemengetriebe (33) antreibbar ist, eine Flüssigkeitsdruckfeitung (24) mit einem Absperrhahn (44), ein Druckluftsystem mit einem einfach wirkenden Federspann-Druckluftzylinder (109), ein Absperrantrieb, zwei Druckluftventile (109) und ein Hydrauliksystem (42) vorgesehen sind, das flexible Schläuche (115, 116), Filter (117), Absperrarmaturen (110, 111, 112), ein Ablassventil (45) und lokale Überwachungsgeräte aufweist,
**dadurch gekennzeichnet,**
**dass** der pneumatische Dispergator (10) mit regelbarer Dispersität einen Fliehkraftzerstäuber (11) mit geformter Ringdüse (12) und einen Hartmannschen Resonator (13) hinter dem Austritt des Fliehkraftzerstäubers (11) aufweist,
**dass** sich die Ringdüse (12) an der Sperrstelle der Stirnfläche der Überschalldüse (9) befindet,
**dass** der pneumatische Dispergator (10) die Möglichkeit hat, einen Aerosolstrahl unter einem vorgegebenen Winkel innerhalb einer oberen räumlichen Halbkugel mit Fernüberwachung und -bedienung zu erzeugen, wobei zwei elektromechanische Antriebe (20, 21) mit Lagewinkelgebern (17, 19) in die Schnittstellen der Bögen (14, 15) mit dem Gebläse (8) eingebaut sind,
**dass** eine Pumpe von dem Motor (5) über ein Keilriemengetriebe (33) antreibbar ist, wobei der Pumpenantrieb eine Übertragungswelle (34) aufweist, an deren einem Ende eine Ölpumpe (27) angeordnet und an deren anderem Ende über eine gemeinsame Kupplung (35) und Keilriemengetriebe (36, 37) ein Verdichter (40) und eine Pumpe (41) mit jeweils einer individuellen Magnetkupplung (38, 39) angeschlossen ist.
**dass** das Schmiersystem (23) des Gebläses (8) eine Druckleitung (24) von der Wanne (26) des Motors (5) bis zum Gebläse (8) aufweist,
**dass** diese Druckleitung (24) die Ölpumpe (27), ein Filter (28) mit einem Druckdifferenzmesser (29), einen Druckgeber (30), eine Ablassleitung (31) von dem Gebläse (8) über das Gehäuse des Wechselgetriebes (7) bis zur Wanne (26) des Motors (5) und Rohrleitungen (25) einschließt,
**dass** das Hydrauliksystem (42) eine Druckleitung (43) von der Pumpe (41) bis zum Absperrhahn (44) einschließlich eines Nachdruckstellventils (45) mit einem Ablass (46) und einem elektromechanischen Antrieb (47) zur Einstellung und Korrektur des vorgegebenen Druckniveaus, ein Mittelfilter (48) mit einem Druckdifferenzmesser (49), einen Druckgeber (50), ein Überdruckventil (51) als Ablassventil, ein Feinfilter (52) mit einem Differenzdruckmesser (53), einen Stromwächter (54), ein Rückschlagventil (55), eine Lufthaube (56), Absperrarmaturen (57, 58, 59, 60, 61), Rohrleitungen (70), eine Abflussleitung (71) vom Absperrhahn (44) über ein Rückschlagventil (72) und eine Rohrleitung (73) bis zur Eintrittsleitung (74) aufweist,
**dass** die Eintrittsleitung (74) mit den Arbeitsflüssigkeitsgefäßen (75, 76, 77) versehen ist, wobei zwei dieser Gefäße (76, 77) mit Füllanlagen (91, 92) und mit Spülungs- und Vermengungsanlagen (93, 94) ausgerüstet sind und wobei die Arbeitsflüssigkeitsgefäße (75, 76, 77) mit der Pumpe (41) über ein Grobfilter (82) verbunden sind und der Kreis Rohrleitungen (99) und Absperrarmaturen (97, 98) einschließt,
**dass** ein Füllstutzen (83) mit einem Siebkorb eine Verbindung mit dem Ablass (46) des Druckregelventils (45) und mit einem Überdruckventil, eine Verbindung zwischen den Spülungs- und Vermengungsanlagen (93, 94) und der Druckluftleitung (41) schafft,
**dass** ein Drucksystem (100) außerdem eine Luftleitung (101) vom Verdichter (40) zum Absperrhahn (44) aufweist, die den Verdichter (40), ein Rückschlagventil (102), einen Druckspeicher (108) mit einem Druckgeber (104), ein Überdruckventil (105), ein Nachdruckregelventil (106), ein Filter (107), ein elektrisches Druckluftventil (108), einen einfach wirkenden Federspann-Druckluftzylinder (109), Absperrarmaturen (110, 111, 112, 113) und Rohrleitungen (114) umfasst,
**dass** der Absperrhahn (44) dabei mit dem Fliehkraftzerstäuber (11) des pneumatischen Dispergators (10) mit regelbarer Dispersität mittels flexibler Schläuche (115, 116) und mittels eines senkrechten Hebers (117) mit einem oben aufgesetzten Schwimmernadelrohrbelüfter (118) verbunden ist und
**dass** die Druckgeber (30, 32, 50, 104), die Lagewinkelgeber (17, 19), die Druckdifferenzmesser (29, 49, 53), die elektromechanischen Antriebe (16, 18, 20, 21, 47), die Magnetkupplungen (35, 38, 39), das elektrische Druckluftventil (108) mit dem Fernbedienungs- und -überwachungspult (3) verbunden sind.

4. Mobiler Aerosolgenerator nach Anspruch 3,
**dadurch gekennzeichnet,**
**dass** er mit einer mobilen fachspezifischen landwirtschaftlichen Wetterstation (176), einem Satellitennavigationssystem GPS (GLONASS) (177), einem Personalrechner (180) und einem Infrarotscheinwerfer (178) mit einem Winkelgeber (179) ausgestattet ist, der mit dem Fernbedienungs- und -überwachungspult (3) verbunden ist.

5. Mobiler Aerosolgenerator nach Anspruch 3,
**dadurch gekennzeichnet,**
**dass** die Austritte der Grob-, Mittel- und Feinfilter (28, 48, 52, 107) des Hydrauliksystems (42) über Absperrarmaturen (57, 58, 59, 60, 61) mittels einer Spülleitung mit einem Druckspeicher des Druckluftsystems (101) und die Eintritte derselben mittels einer Abflussleitung (31) mit einem Schmutzfänger (191) verbunden sind.

6. Mobiler Aerosolgenerator nach Anspruch 3 bis 5,
**dadurch gekennzeichnet,**
**dass** der Generator auch einen Mischer (130) aufweist, der an seinem Eintritt mit einer Druckleitung (43) und der Flüssigkeitsversorgungsleitung (132) mit einer Absperrarmatur (131) und mit seinem Austritt mit einer Rohrleitung (133) zur Entnahme der gasgesättigten Flüssigkeit und einem Flüssigkeitsventil (134) mit dem Absperrhahn (44) verbunden ist, wobei die genannte Druckleitung (43) mittels der Absperrarmatur (141) vor dem Rückschlagventil (134) vom Absperrhahn (44) absperrbar ist,
**dass** der Mischer (130) zusätzlich mit der Hauptluftleitung (101) mittels einer Luftleitung (135) mit einem Rückschlagventil (134), einem Druckgeber (136) und einem Anpassungsventil (137) verbunden ist, wobei die Luftleitung (43) zusätzlich an die Flüssigkeitsversorgungsleitung (132) mittels einer Impulsleitung (138) mit dem Druckgeber (136) angeschlossen ist und
**dass** die Hauptleitung (101) mit einem elektrischen Druckluftventil (140), das mit dem Fernbedienungs- und -überwachungspult (3) verbunden ist, und eine Absperrarmatur (61) an der Luftleitung (135) angeschlossen sind.

7. Mobiler Aerosolgenerator nach Anspruch 6,
**dadurch gekennzeichnet,**
**dass** der Mischer (130) aus folgenden Bauteilen besteht:
- einem senkrechten Zylindergehäuse (142) mit Anschlüssen (143, 144) für die Flüssigkeitszuführung (143) und die Entnahme der gasgesättigten Flüssigkeit,
- einem geschlossenen Hohlkegel (145) aus feinporigem Material, wobei der Hohlkegel (145) sich koaxial im Gehäuse (142) befindet und wobei der Hohlkegel (145) sich nach oben verjüngt und mit einer Luftleitung verbunden ist,
- einem Schwimmer (146) mit einer Sammelleitung (147), der unten mit einem Kolben (154) des Lufteinlassventils (150) mittels einer senkrechten Nadel (148) verbunden ist; wobei der Kolben (154) den Durchlassquerschnitt regelt und das Lufteinlassventil (150) mit einem Stutzen versehen ist, wobei der Schwimmer (146) oben mit einem Kolben des Belüftungsventils (155) mittels eines Kardangelenks (153) verbunden ist, der Kolben (154) den Durchlassquerschnitt regelt und einen mit dem Kolben (154) verbundenen Beruhigungsraum (157) und eine Drossel (158) umfasst, die im Ventilgehäuse (156) eingebaut sind und wobei die Ventillage im Mischer (130) axial regelbar ist.

8. Mobiler Aerosolgenerator nach Anspruch 6,
**dadurch gekennzeichnet,**
**dass** das Anpassungsventil (137) aus einem trennbaren Hohlgehäuse (159) mit Ein- und Austrittsanschlüssen (160, 161, 162) und einer flachen Membran (163) an der Trennstelle besteht,
**dass** die Membran (163) das Gehäuse (159) in den Flüssigkeits- (164) und Luftraum (165) aufteilt; wobei der Luftraum (165) mittels einer Paarungsstelle zwischen dem Sitz (168) und dem Kegel (169) in zwei Räume, vor und hinter dem Sitz, geteilt ist,
**dass** das eine Ende des Kegels (169) mit der Membran (163) verbunden ist, während das andere Ende des Kegels (169) kolbenseitig im Beruhigungsraum (172) mit der Drossel (173) sitzt,
**dass** diese Räume vor dem Sitz (168) mit der Hauptluftleitung (101) und nach dem Sitz (168) mit dem Mischer (130) kommunizieren und
**dass** der Flüssigkeitsraum (164) mittels der Impulsleitung (138) mit der Flüssigkeitszuführungsleitung (143) kommuniziert und ein regelbares Federwerk zur Vorspannung der Membran (163) aufweist.

9. Mobiler Aerosolgenerator Anspruch 6,
**dadurch gekennzeichnet,**
**dass** er einer mobilen landwirtschaftlichen Wetterstation (176), einem Satellitennavigationssystem GPS (GLONASS) (177), einem Personalrechner (180) und Infrarotsuchscheinwerfer (178) mit einem Winkelgeber (179) ausgerüstet ist, der mit dem Fernbedienungs- und -überwachungspult (3) verbunden ist.

10. Mobiler Aerosolgenerator nach Anspruch 6,
**dadurch gekennzeichnet,**
**dass** die Austritte der Grob-, Mittel- und Feinfilter (48, 52, 82) des Hydrauliksystems (42) über Absperrarmaturen (57, 58, 59, 60, 61) und die Spülleitung (182) mit dem Druckspeicher (103, 139) des Druckluftsystems (100, 101) und die Eintritte mittels der Abflußleitung (182) mit einem Schmutzfänger (191) verbunden sind.
